(19) **Europäisches Patentamt / European Patent Office / Office européen des brevets**

(11) **EP 4 661 544 A1**

(12) **EUROPEAN PATENT APPLICATION**
published in accordance with Art. 153(4) EPC

(43) Date of publication:
**10.12.2025 Bulletin 2025/50**

(21) Application number: **24752836.7**

(22) Date of filing: **04.02.2024**

(51) International Patent Classification (IPC):
**H04W 72/0453** *(2023.01)*

(52) Cooperative Patent Classification (CPC):
**H04W 72/0453; H04W 72/23; H04W 72/53**

(86) International application number:
**PCT/CN2024/075863**

(87) International publication number:
**WO 2024/164981 (15.08.2024 Gazette 2024/33)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **08.02.2023 CN 202310152276**

(71) Applicant: **Huawei Technologies Co., Ltd.**
**Shenzhen, Guangdong 518129 (CN)**

(72) Inventors:
- **HUA, Meng**
  **Shenzhen, Guangdong 518129 (CN)**
- **GAO, Fei**
  **Shenzhen, Guangdong 518129 (CN)**
- **HUANG, Xiuxuan**
  **Shenzhen, Guangdong 518129 (CN)**
- **PENG, Jinlin**
  **Shenzhen, Guangdong 518129 (CN)**

(74) Representative: **Körber, Martin Hans**
**Mitscherlich PartmbB**
**Patent- und Rechtsanwälte**
**Karlstraße 7**
**80333 München (DE)**

(54) **BANDWIDTH PART SWITCHING METHOD AND APPARATUS**

(57) This application provides a bandwidth part switching method and an apparatus. The method includes: A network device sends first downlink control information DCI to a terminal, where a first indication field in the first DCI indicates a first cell, no bandwidth part BWP whose BWP identifier is a value of a BWP indicator field in the first DCI is configured in the first cell, and the first indication field indicates one or more cells for data transmission. The network device performs data transmission with the terminal on a first BWP, where the first BWP is one of BWPs configured in the first cell.

| Network device | | Terminal |
|---|---|---|
| | Step 1200: First DCI, where a first indication field in the first DCI indicates a first carrier, and no BWP whose BWP identifier is a value of a BWP indicator field in the first DCI is configured on the first carrier | |
| | Step 1210: Perform data transmission by using a first BWP | |

FIG. 12

EP 4 661 544 A1

**Description**

CROSS-REFERENCE TO RELATED APPLICATIONS

This application claims priority to Chinese Patent Application No. 202310152276.0, filed with the China National Intellectual Property Administration on February 8, 2023 and entitled "BANDWIDTH PART SWITCHING METHOD AND APPARATUS", which is incorporated herein by reference in its entirety.

TECHNICAL FIELD

Embodiments of this application relate to the wireless communication field, and in particular, to a bandwidth part switching method and an apparatus.

BACKGROUND

Currently, two new downlink control information (downlink control information, DCI) formats, also referred to as multi-cell scheduling DCI formats, are discussed in the standard. One multi-cell scheduling DCI format is used to simultaneously schedule physical uplink shared channels (physical uplink shared channel, PUSCH) in a plurality of cells (cell), and the other multi-cell scheduling DCI format is used to simultaneously schedule physical downlink shared channels (physical downlink shared channel, PDSCH) in a plurality of cells. The multi-cell scheduling DCI format includes an indication field. The indication field may indicate one or more cells for data transmission. Alternatively, it may be understood that the indication field may indicate one or more uplink carriers or downlink carriers for data transmission. There is also another indication field in the multi-cell scheduling DCI format, and the indication field may indicate bandwidth part (bandwidth part, BWP) switching. Based on the multi-cell scheduling DCI format, how to improve BWP switching efficiency is a problem worthy of attention.

SUMMARY

This application provides a BWP switching method and an apparatus, to improve BWP switching efficiency.

According to a first aspect, this application provides a BWP switching method. The method may be performed by a terminal or a module (such as a chip) used in the terminal. The method includes: receiving first information from a network device, where the first information indicates BWP switching of a first carrier, the first information is not used to schedule data transmission of a second carrier, and the first carrier and the second carrier are configured in different cells; and performing BWP switching of the first carrier and BWP switching of the second carrier based on the first information, where both a BWP before the BWP switching and a BWP after the BWP switching of the second carrier are non-dormant BWPs.

According to the foregoing design, when the first information indicates BWP switching of the first carrier, and the first information is not used to schedule data transmission of the second carrier, the terminal may be triggered to switch a BWP of the second carrier based on the first information, so that a plurality of BWP switching delays that may be caused by subsequent cell scheduling can be reduced, and BWP switching efficiency can be improved.

In a possible design, the first information is used to schedule data transmission of the first carrier.

In a possible design, when BWP switching of the first carrier and BWP switching of the second carrier are performed based on the first information, BWP switching of the first carrier and BWP switching of the second carrier are performed based on a value of a BWP indicator field in the first information. A BWP of the second carrier after the BWP switching corresponds to the value of the BWP indicator field in the first information, at least two BWPs are configured on the second carrier, and the BWP of the second carrier after the BWP switching is different from a BWP of the second carrier before the BWP switching.

In a possible design, when the first carrier and the second carrier belong to a first set, BWP switching of the second carrier is performed based on the first information. The first set is a set of carriers that can be scheduled in a first DCI format, and the first DCI format can be used to simultaneously schedule data transmission of two or more carriers.

In a possible design, the first carrier and the second carrier can be simultaneously indicated by using a value of a first indication field in the first DCI format, and the first indication field indicates one or more carriers for data transmission.

In a possible design, the first carrier and the second carrier belong to a second set, the second set is a subset of the first set, and a quantity of carriers included in the second set is greater than or equal to 2. For a third carrier in the second set, there is at least one carrier in the second set that together with the third carrier can be simultaneously indicated by using a value of the first indication field in the first DCI format, and the third carrier and another carrier in the first set other than the second set cannot be simultaneously indicated by using any value of the first indication field. The third carrier is any carrier in the second set, and the first indication field indicates one or more carriers for data transmission.

According to a second aspect, this application provides a BWP switching method. The method may be performed by a network device or a module (for example, a chip) used in the network device. The method includes: sending first information to a terminal, where the first information indicates BWP switching of a first carrier, the first information is not used to schedule data transmission of a second carrier, and the first carrier and the second carrier are configured in different cells; and performing BWP switching of the first carrier and BWP switching of the second carrier, where both a BWP before the BWP switching and a BWP after the BWP switching of the second carrier are non-dormant BWPs, and both a BWP of the first carrier after the BWP switching and the BWP of the second carrier after the BWP switching correspond to the first information. The method is a network device side method corresponding to the first aspect, and therefore can also achieve beneficial effects that can be achieved in the first aspect.

In a possible design, the first information is used to schedule data transmission of the first carrier.

In a possible design, the BWP of the second carrier after the BWP switching corresponds to a value of a BWP indicator field in the first information, at least two BWPs are configured on the second carrier, and the BWP of the second carrier after the BWP switching is different from the BWP of the second carrier before the BWP switching.

In a possible design, the first carrier and the second carrier belong to a first set, the first set is a set of carriers that can be scheduled in a first DCI format, and the first DCI format can be used to simultaneously schedule data transmission of two or more carriers.

In a possible design, the first carrier and the second carrier can be simultaneously indicated by using a value of a first indication field in the first DCI format, and the first indication field indicates one or more carriers for data transmission.

In a possible design, the first carrier and the second carrier belong to a second set, the second set is a subset of the first set, and a quantity of carriers included in the second set is greater than or equal to 2. For a third carrier in the second set, there is at least one carrier in the second set that together with the third carrier can be simultaneously indicated by using a value of the first indication field in the first DCI format, and the third carrier and another carrier in the first set other than the second set cannot be simultaneously indicated by using any value of the first indication field. The third carrier is any carrier in the second set, and the first indication field indicates one or more carriers for data transmission.

According to a third aspect, this application provides a communication method. The method may be performed by a terminal or a module used in the terminal, or may be performed by a network device or a module used in the network device. The method includes: determining that a first cell enters an active state from an inactive state or enters a non-dormant state from a dormant state; and determining, based on an active BWP of a second cell, the first active BWP of the first cell after the state switching.

According to the foregoing design, when a cell enters an active state from an inactive state or enters a non-dormant state from a dormant state, the first active BWP of the cell is determined based on an active BWP of another cell, so that a plurality of BWP switching delays that may be caused by subsequent cell scheduling can be reduced.

In a possible design, when the first active BWP of the first cell is determined based on the active BWP of the second cell, when a first carrier and a second carrier belong to a first set, the first active BWP of the first cell is determined based on the active BWP of the second cell. The first set is a set of carriers that can be scheduled in a first DCI format, and the first DCI format can be used to simultaneously schedule data transmission of two or more carriers. The first carrier is a carrier configured for the first cell, and the second carrier is a carrier configured for the second cell.

In a possible design, the first carrier and the second carrier can be simultaneously indicated by using a value of a first indication field in the first DCI format, and the first indication field indicates one or more carriers for data transmission.

In a possible design, the first carrier and the second carrier belong to a second set, the second set is a subset of the first set, and a quantity of carriers included in the second set is greater than or equal to 2. For a third carrier in the second set, there is at least one carrier in the second set that together with the third carrier can be simultaneously indicated by using a value of the first indication field in the first DCI format, and the third carrier and another carrier in the first set other than the second set cannot be simultaneously indicated by using any value of the first indication field. The third carrier is any carrier in the second set, and the first indication field indicates one or more carriers for data transmission.

In a possible design, when the first active BWP of the first cell after the state switching is determined based on the active BWP of the second cell, when the first cell enters the active state from the inactive state, the first active downlink BWP of the first cell after the state switching is determined based on an active downlink BWP of the second cell, and/or the first active uplink BWP of the first cell after the state switching is determined based on an active uplink BWP of the second cell.

In a possible design, when the first active BWP of the first cell after the state switching is determined based on the active BWP of the second cell, when the first cell enters the non-dormant state from the dormant state, the first non-dormant active downlink BWP of the first cell after the state switching is determined based on a non-dormant active downlink BWP of the second cell, and/or the first non-dormant active uplink BWP of the first cell after the state switching is determined based on a non-dormant active uplink BWP of the second cell.

According to a fourth aspect, this application provides a communication method. The method may be performed by a network device or a module used in the network device. The method includes: sending first DCI, where a first indication field in the first DCI indicates a first carrier, no BWP whose BWP identifier is a value of a BWP indicator field in the first DCI is configured on the first carrier, and the first indication field indicates one or more carriers for data transmission; and

performing data transmission on a first BWP, where the first BWP is one of BWPs configured on the first carrier.

According to the foregoing design, when there is no BWP corresponding to the value of the BWP indicator field on the first carrier, a BWP on the first carrier can be determined for data transmission.

In a possible design, a BWP identifier of the first BWP is determined based on the value of the BWP indicator field and a total quantity of BWPs configured on the first carrier.

In a possible design, a radio resource control RRC message is sent, where the RRC message indicates the first BWP.

According to a fifth aspect, this application provides a communication method. The method may be performed by a terminal or a module used in the terminal. The method includes: receiving first DCI, where a first indication field in the first DCI indicates a first carrier, no BWP whose BWP identifier is a value of a BWP indicator field in the first DCI is configured on the first carrier, and the first indication field indicates one or more carriers for data transmission; and performing data transmission on a first BWP, where the first BWP is one of BWPs configured on the first carrier. The method is a terminal side method corresponding to the fourth aspect, and therefore can also achieve beneficial effects that can be achieved in the fourth aspect.

In a possible design, a BWP identifier of the first BWP is determined based on the value of the BWP indicator field and a total quantity of BWPs configured on the first carrier.

In a possible design, the method further includes: receiving an RRC message, where the RRC message indicates the first BWP.

According to a sixth aspect, this application provides a communication method. The method may be performed by a network device or a module used in the network device. The method includes: determining to schedule data transmission of a first carrier, but not to schedule data transmission of a second carrier; and sending first DCI, where a first indication field in the first DCI indicates the first carrier and the second carrier, no BWP whose BWP identifier is a value of a BWP indicator field in the first DCI is configured on the second carrier, and the first indication field indicates one or more carriers for data transmission.

According to the foregoing method, when there is no BWP corresponding to a value of a BWP indicator field on a carrier, it can be determined not to schedule the carrier to perform data transmission.

According to a seventh aspect, this application provides a communication method. The method may be performed by a terminal or a module used in the terminal. The method includes: receiving first DCI, where a first indication field in the first DCI indicates a first carrier and a second carrier, no BWP whose BWP identifier is a value of a BWP indicator field in the first DCI is configured on the second carrier, and the first indication field indicates one or more carriers scheduled by using the first DCI to perform data transmission; and determining, based on the first DCI, that the first DCI is used to schedule data transmission of the first carrier, but not used to schedule data transmission of the second carrier. The method is a terminal side method corresponding to the sixth aspect, and therefore can also achieve beneficial effects that can be achieved in the sixth aspect.

According to an eighth aspect, this application further provides an apparatus. The apparatus may perform the foregoing method design. The apparatus may be a chip or a circuit that can perform a function corresponding to the foregoing method, or an apparatus including the chip or the circuit.

In a possible implementation, the apparatus includes: a memory, configured to store computer-executable program code; and a processor, where the processor is coupled to the memory. The program code stored in the memory includes instructions. When the processor executes the instructions, the apparatus or a device on which the apparatus is installed is enabled to perform the method in any one of the foregoing possible designs.

The apparatus may further include a communication interface. The communication interface may be a transceiver. Alternatively, if the apparatus is a chip or a circuit, the communication interface may be an input/output interface of the chip, for example, an input/output pin.

In a possible design, the apparatus includes corresponding functional units, respectively configured to implement the steps in the foregoing method. The functional units may be implemented by hardware, or may be implemented by hardware executing corresponding software. The hardware or the software includes one or more units corresponding to the foregoing function.

According to a ninth aspect, this application provides a computer-readable storage medium. The computer-readable storage medium stores a computer program. When the computer program is run on an apparatus, the method in any one of the foregoing possible designs is performed.

According to a tenth aspect, this application provides a computer program product. The computer program product includes a computer program. When the computer program is run on an apparatus, the method in any one of the foregoing possible designs is performed.

BRIEF DESCRIPTION OF DRAWINGS

FIG. 1 is a diagram of an architecture of a mobile communication system to which an embodiment of this application is applied;

FIG. 2 is a diagram in which a plurality of BWPs are configured on one carrier according to this application;

FIG. 3 is a diagram of simultaneously scheduling a plurality of cells by using multi-cell scheduling DCI according to this application;

FIG. 4 is a diagram 1 of BWP switching in subsequent cell scheduling after BWP switching of a cell according to this application;

FIG. 5 is a diagram 1 of BWP switching in subsequent cell scheduling when a cell enters an active state from an inactive state according to this application;

FIG. 6 is a general flowchart of BWP switching according to this application;

FIG. 7 is a diagram of a relationship between a first set, a second set, and a third set according to this application;

FIG. 8 is a diagram 2 of BWP switching in subsequent cell scheduling after BWP switching of a cell according to this application;

FIG. 9 is a general flowchart of another BWP switching method according to this application;

FIG. 10 is a general flowchart of a communication method according to this application;

FIG. 11 is a diagram 2 of BWP switching in subsequent cell scheduling when a cell enters an active state from an inactive state according to this application;

FIG. 12 is a general flowchart of a method according to Embodiment 1 of this application;

FIG. 13 is a general flowchart of a method according to Embodiment 4 of this application;

FIG. 14 is a diagram of a structure of a communication apparatus according to this application; and

FIG. 15 is a diagram of a structure of another communication apparatus according to this application.

DESCRIPTION OF EMBODIMENTS

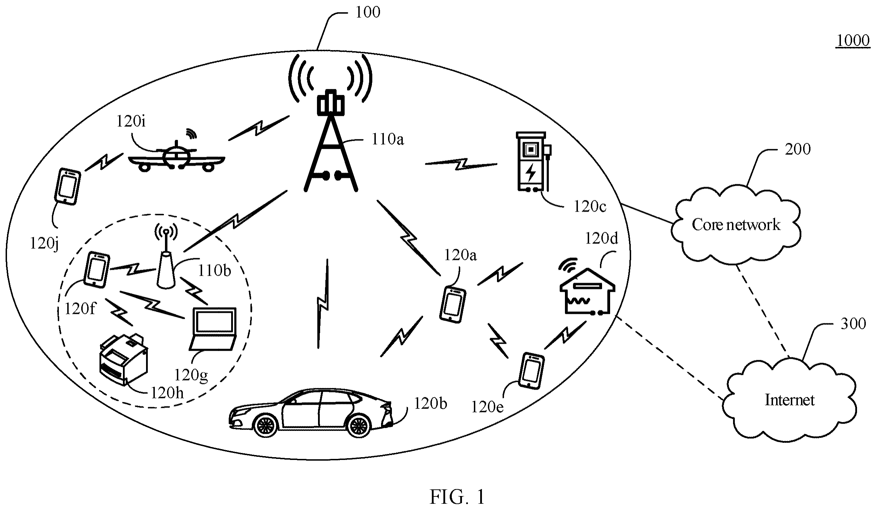

FIG. 1 is a diagram of an architecture of a communication system 1000 to which an embodiment of this application is applied. As shown in FIG. 1, the communication system includes a radio access network 100 and a core network 200. Optionally, the communication system 1000 may further include the internet 300. The radio access network 100 may include at least one radio access network device (for example, 110a and 110b in FIG. 1), and may further include at least one terminal (for example, 120a to 120j in FIG. 1). The terminal is connected to the radio access network device in a wireless manner, and the radio access network device is connected to the core network in a wireless or wired manner. A core network device and a radio access network device may be different independent physical devices, or functions of the core network device and logical functions of the radio access network device may be integrated into a same physical device, or a part of functions of the core network device and a part of functions of the radio access network device may be integrated into one physical device. A wired or wireless manner may be used for connection between terminals and between radio access network devices. FIG. 1 is merely a diagram. The communication system may further include other network devices, for example, may further include a wireless relay device and a wireless backhaul device, which are not shown in FIG. 1.

The radio access network device is an access device used by the terminal to access the communication system in a wireless manner. The radio access network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation NodeB in a 6th generation (6th generation, 6G) mobile communication system, a base station in a future mobile communication system, or the like; or may be a module or a unit that completes a part of functions of a base station, for example, may be a central unit (central unit, CU), or may be a distributed unit (distributed unit, DU). The CU herein completes functions of a radio resource control protocol and a packet data convergence protocol (packet data convergence protocol, PDCP) of the base station, and may further complete a function of a service data adaptation protocol (service data adaptation protocol, SDAP). The DU completes functions of a radio link control layer and a medium access control (medium access control, MAC) layer of the base station, and may further complete a part of or all functions of a physical layer. For specific descriptions of the protocol layers, refer to related technical specifications of the 3rd generation partnership project (3rd generation partnership project, 3GPP). The radio access network device may be a macro base station (for example, 110a in FIG. 1), or may be a micro base station or an indoor station (for example, 110b in FIG. 1), or may be a relay node or a donor node. A specific technology and a specific device form that are used by the radio access network device are not limited in embodiments of this application. For ease of description, a network device is short for the radio access network device, and a base station is used as an example of the radio access network device.

The terminal is a device having a wireless transceiver function, and may send a signal to the base station, or receive a signal from the base station. The terminal may alternatively be referred to as a terminal device, user equipment (user equipment, UE), a mobile station, a mobile terminal, or the like. The terminal may be widely used in various scenarios, for example, device-to-device (device-to-device, D2D) communication, vehicle-to-everything (vehicle-to-everything, V2X) communication, machine-type communication (machine-type communication, MTC), the internet of things (internet of things, IoT), virtual reality, augmented reality, industrial control, self-driving, telemedicine, a smart grid, smart furniture, a smart office, a smart wearable, smart transportation, and a smart city. The terminal may be a mobile phone, a tablet computer, a computer with a wireless transceiver function, a wearable device, a vehicle, an airplane, a ship, a robot, a robotic arm, a smart household device, or the like. A specific technology and a specific device form that are used by the terminal are not limited in embodiments of this application.

The base station and the terminal may be at fixed positions, or may be movable. The base station and the terminal may be deployed on land, including an indoor or outdoor device, a hand-held device, or a vehicle-mounted device, or may be deployed on water, or may be deployed on an airplane, a balloon, or an artificial satellite. Application scenarios of the base station and the terminal are not limited in embodiments of this application.

Roles of the base station and the terminal may be relative. For example, a helicopter or uncrewed aerial vehicle 120i in FIG. 1 may be configured as a mobile base station. For those terminals 120j accessing the radio access network 100 via 120i, the terminal 120i is a base station, while for the base station 110a, 120i is a terminal, that is, communication between 110a and 120i is performed based on a wireless air interface protocol. Certainly, the communication between 110a and 120i may alternatively be performed based on an interface protocol between base stations. In this case, for 110a, 120i is also a base station. Therefore, the base station and the terminal may be collectively referred to as a communication apparatus, 110a and 110b in FIG. 1 may be referred to as a communication apparatus having a base station function, and 120a to 120j in FIG. 1 may be referred to as a communication apparatus having a terminal function.

Communication between a base station and a terminal, between base stations, and between terminals may be performed by using a licensed spectrum, an unlicensed spectrum, or both, which may be performed by using a spectrum below 6 gigahertz (gigahertz, GHz), a spectrum above 6 GHz, or both. A spectrum resource used for wireless communication is not limited in embodiments of this application.

In embodiments of this application, a function of the base station may alternatively be performed by a module (for example, a chip) in the base station, or may be performed by a control subsystem including the function of the base station. The control subsystem including the function of the base station herein may be a control center in the foregoing application scenario such as a smart grid, industrial control, smart transportation, or a smart city. A function of the terminal may alternatively be performed by a module (for example, a chip or a modem) in the terminal, or may be performed by an apparatus including the function of the terminal.

In this application, the base station sends a downlink signal or downlink information to the terminal, where the downlink information is carried on a downlink channel; and the terminal sends an uplink signal or uplink information to the base station, where the uplink information is carried on an uplink channel. To communicate with the base station, the terminal needs to establish a wireless connection to a cell controlled by the base station. The cell that establishes the wireless connection to the terminal is referred to as a serving cell of the terminal. When communicating with the serving cell, the terminal may be interfered with by a signal from a neighboring cell.

It may be understood that, in embodiments of this application, a PDSCH, a PDCCH, a physical uplink control channel (physical uplink control channel, PUCCH), and a PUSCH are merely used as examples of a downlink data channel, a downlink control channel, an uplink control channel, and an uplink data channel respectively. In different systems and different scenarios, the data channels and the control channels may have different names. This is not limited in embodiments of this application.

For ease of understanding of embodiments of this application, several basic concepts in embodiments of this application are briefly described.

1. Carrier

The carrier (carrier) is a radio signal that is transmitted by a radio frequency device of a base station or a terminal and that has a specific frequency, bandwidth, and standard, that is, an electromagnetic wave, which is a subject for carrying information in wireless mobile communication. A carrier used by the base station for sending is referred to as a downlink carrier, and a carrier used by the terminal for sending is referred to as an uplink carrier.

2. Cell

The cell (cell) is described from a perspective of resource management or mobility management by a higher layer (for example, a protocol layer above a physical layer, such as a radio resource control layer or a medium access control layer). A coverage area of each base station may be divided into one or more cells. In a current new radio (new radio, NR) standard, for one cell, one downlink carrier may be configured, and optionally, one or two uplink carriers may be further configured. For a terminal, a cell that provides a service for the terminal is referred to as a serving cell. A related cell in this application may be a serving cell.

3. Carrier aggregation and dual connectivity

To achieve high-speed transmission, NR supports carrier aggregation (carrier aggregation, CA) and dual connectivity (dual connectivity, DC) technologies. A terminal that supports CA and/or DC may simultaneously perform data transmission on a plurality of carriers, to improve a data transmission rate.

Through dual connectivity, the terminal may establish connections to a plurality of cells. These cells are divided into two groups: a master cell group (master cell group, MCG) and a secondary cell group (secondary cell group, SCG). If dual connectivity is not performed, a group of cells communicating with the terminal is the MCG.

A primary cell in the MCG is a primary cell (primary cell, PCell), a primary cell in the SCG is a primary secondary cell (primary secondary cell, PSCell), and other cells in the MCG and the SCG are secondary cells (secondary cell, SCell).

The PCell in the MCG and the SCell in the MCG provide services for the terminal by using the CA technology. The PSCell in the SCG and the SCell in the SCG also provide services for the terminal by using the CA technology.

Each carrier in the CA is also referred to as a component carrier (component carrier, CC).

In this application, multi-cell scheduling may be uplink scheduling of a plurality of cells or downlink scheduling of a plurality of cells. The uplink scheduling of a plurality of cells is scheduling data transmission on an uplink carrier of each of the plurality of cells, and the downlink scheduling of a plurality of cells is scheduling data transmission on a downlink carrier of each of the plurality of cells. Therefore, scheduling data transmission of a cell is scheduling an uplink carrier or a downlink carrier of the cell to perform data transmission. If no logic conflict occurs, in this application, a "cell" may be exchanged with a "carrier". For example, a "secondary component carrier" may be exchanged with a "secondary cell".

4. Cross-carrier scheduling

A cell that sends a downlink control channel used to schedule a data channel is referred to as a scheduling cell (scheduling cell). A cell that sends a data channel is referred to as a scheduled cell (scheduled cell).

If a downlink carrier of a cell carries a downlink control channel to schedule uplink and downlink data channels of this cell, this cell is referred to as a self-scheduling (self-scheduling) cell. In other words, the cell is a scheduling cell and a scheduled cell.

If a downlink carrier of a cell carries a downlink control channel to schedule uplink and downlink data channels of another cell, the cell that carries the control channel is referred to as a scheduling cell, and the cell that carries the uplink and downlink data channels is referred to as a scheduled cell. This scheduling mode is referred to as cross-carrier scheduling (cross-carrier scheduling, CCS). One scheduling cell may correspond to a plurality of scheduled cells, that is, one scheduling cell may send a control channel to perform data scheduling of a plurality of scheduled cells.

5. BWP

A concept of the BWP is introduced in NR. One BWP is a segment of contiguous frequency resources on one carrier. There may be one or more BWPs on one carrier, and a bandwidth of a BWP on one carrier is less than or equal to a bandwidth of the carrier. After a BWP is configured and activated, the BWP is referred to as an active BWP. In a current version of a protocol, one terminal can have only one active downlink BWP (active downlink BWP) on one downlink carrier, and only one active uplink BWP (active uplink BWP) on one uplink carrier. Generally, the terminal sends uplink data and control information on the active uplink BWP, and receives downlink data and control information on the active downlink BWP.

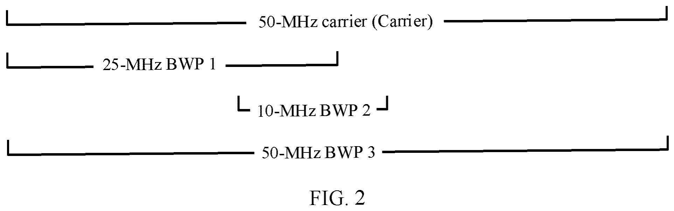

As shown in FIG. 2, three BWPs are configured on a 50-MHz carrier: a BWP 1, a BWP 2, and a BWP 3, and an active BWP is the BWP 2.

An NR spectrum includes a paired spectrum (paired spectrum) and an unpaired spectrum (unpaired spectrum). Frequency division duplex (frequency division duplex, FDD) is used in the paired spectrum, and time division duplex (time division duplex, TDD) is used in the unpaired spectrum.

In an FDD mode, uplink and downlink BWPs of a cell may be independently configured, and a quantity of uplink BWPs and a quantity of downlink BWPs may be the same or may be different. In the FDD mode, switching of an active uplink BWP and switching of an active downlink BWP may be performed independently. In other words, the active uplink BWP may be switched, while the active downlink BWP is not switched; or the active downlink BWP is switched, while the active uplink BWP is not switched.

In a TDD mode, uplink and downlink BWPs of a cell are configured in pairs. A pair of uplink and downlink BWPs have a same BWP sequence number and center frequency, but may have different bandwidths. In the TDD mode, active BWP switching occurs on an uplink and a downlink simultaneously, that is, switching may be performed from one pair of BWPs to another pair of BWPs.

In the FDD mode, BWP switching may be replaced with that in a paired spectrum. In the TDD mode, BWP switching may be replaced with that in an unpaired spectrum.

6. BWP switching

BWP switching may include but is not limited to the following several manners:

At different moments, a terminal may have different service requirements and different transmission bandwidth requirements. For example, an NR base station can activate different BWPs at different moments based on service requirements, to reduce power consumption of the terminal and the like.

(1) DCI-based active BWP switching

NR supports BWP switching of the terminal triggered by DCI for scheduling data. The DCI is carried on an NR physical downlink control channel (physical downlink control channel, PDCCH).

The DCI-based active BWP switching further includes two types: switching between non-dormant BWPs, and switching between a dormant BWP and a non-dormant BWP. For the switching between a dormant BWP and a non-dormant BWP, refer to the following related descriptions about carrier dormancy. The switching between non-dormant BWPs is mainly described herein.

The DCI includes a BWP indicator (BWP indicator) field. If a BWP identifier (identifier, ID) indicated by a BWP indicator field in a piece of DCI is different from an ID of a current active BWP, this piece of DCI triggers BWP switching. If a BWP ID indicated by a BWP indicator field in a piece of DCI is the same as an ID of a current active BWP, this piece of DCI does not trigger BWP switching.

A DCI format (DCI format) including a BWP indicator field can be sent only in the first three symbols of a slot (slot).

(2) Timer (timer)-based active BWP switching

A network device may configure a BWP inactivity timer for a cell by using a radio resource control (radio resource control, RRC) information element bwp-InactivityTimer, and may configure a default downlink BWP by using an RRC information element defaultDownlinkBWP-Id. Alternatively, the default downlink BWP may not be configured. If the cell is not scheduled to perform terminal-specific data transmission within a time of the BWP inactivity timer, an active downlink BWP is switched to the default downlink BWP (if the default downlink BWP is not configured, the active downlink BWP is switched to an initial downlink BWP).

It should be noted that there is a slot-level delay in BWP switching in a cell, and the network device and the terminal cannot communicate in the cell in a time period from BWP switching start to BWP switching completion.

7. SCell dormancy

3GPP specifications support a secondary cell (SCell) dormancy (dormancy) mechanism. Uplink and downlink transmission of a dormant secondary cell (dormant SCell) both stop, but periodic measurement is still performed on the cell, and a measurement report of the cell is reported to the network device via another cell (that is, a PUCCH cell). Switching between a dormant state and a non-dormant state (non-dormancy) of an SCell is implemented through BWP switching. When an SCell is indicated as dormant, the terminal switches from a current active downlink BWP to a dormant BWP (dormant BWP) in the SCell, and the terminal does not need to perform PDCCH monitoring on the dormant BWP. Alternatively, when the SCell is a scheduled carrier in cross-carrier scheduling, the terminal does not need to detect a PDCCH that is on a corresponding scheduling carrier and that is used to schedule the SCell. An ID of the dormant BWP is indicated by an RRC information element dormantBWP-Id.

A cell may be in an active state or an inactive state. The cell in the active state further includes two states: a dormant state and a non-dormant state. The dormant state means that an active downlink BWP of the cell in the active state is a dormant BWP, and the non-dormant state means that the active downlink BWP of the cell in the active state is a non-dormant BWP.

Different from the foregoing BWP switching indicated by using the BWP indicator field in the DCI, switching between the dormant state and the non-dormant state of the SCell is indicated by using another field in DCI. Specifically, there are the following several indication manners.

In a non-discontinuous reception (discontinuous reception, DRX) mode or in an active time period in a DRX mode, there are two indication manners:

Manner 1: Whether SCells are in the dormant state or the non-dormant state is indicated in groups by using a secondary cell dormancy indication (SCell dormancy indication) field in a DCI format 0_1 or 1_1, and the DCI may be used to schedule data at the same time.

Manner 2: Whether SCells are in the dormant state or the non-dormant state is indicated one by one by using a specific field in the DCI format 1_1, and the DCI cannot be used to schedule data at the same time.

In an inactive time period in the DRX mode, there is the following indication manner:

Manner 3: Whether an SCell is in the dormant state or the non-dormant state is indicated by using a secondary component carrier dormancy indication (SCell dormancy indication) field in a DCI format 2_6.

For a cell, the network device may configure, by using an RRC information element firstWithinActiveTimeBWP-Id, an identifier of the first BWP corresponding to the cell within an active time, and may configure, by using an RRC information element firstOutsideActiveTimeBWP-Id, an identifier of the first BWP corresponding to the cell outside the active time. In the non-DRX mode or in the active time period in the DRX mode, when the terminal receives a PDCCH that indicates to switch from the dormant state to the non-dormant state, and switches from the dormant state to the non-dormant state, a downlink BWP whose ID is firstWithinActiveTimeBWP-Id is activated. In the inactive time period in the DRX mode, when the terminal receives a PDCCH that indicates to switch from the dormant state to the non-dormant state, and switches from the dormant state to the non-dormant state, a downlink BWP whose ID is firstOutsideActiveTimeBWP-Id is activated.

In the TDD mode, uplink and downlink BWP switching are bound. Therefore, when a downlink BWP of a cell is switched from a current active downlink BWP to a downlink BWP whose ID is dormantBWP-Id, an uplink BWP is also switched to an uplink BWP whose ID is dormantBWP-Id. When a downlink BWP of a cell is switched from a dormant BWP to a downlink BWP whose ID is firstWithinActiveTimeBWP-Id, an uplink BWP is also switched to an uplink BWP whose ID is firstWithinActiveTimeBWP-Id. Alternatively, when a downlink BWP of a cell is switched from a dormant BWP to a downlink BWP whose ID is firstOutsideActiveTimeBWP-Id, an uplink BWP is also switched to an uplink BWP whose ID is firstOutsideActiveTimeBWP-Id.

In the FDD mode, uplink and downlink BWP switching are independent. Therefore, when a downlink BWP of a cell is switched from a current active downlink BWP to a dormant BWP, an uplink BWP of the cell is not switched. Similarly, when a downlink BWP of a cell is switched from a dormant BWP to a downlink BWP whose ID is firstWithinActiveTimeBWP-Id or a downlink BWP whose ID is firstOutsideActiveTimeBWP-Id, an uplink BWP is not switched. It should be noted that, when an SCell enters the dormant state, although an uplink BWP is not switched, data sending on the uplink BWP stops, including a data channel, a control channel, a sounding reference signal (sounding reference signal, SRS), a physical random access channel (physical random access channel, PRACH), and the like.

8. SCell activation and deactivation

A PCell does not support activation or deactivation, while an SCell supports activation or deactivation. The SCell in the inactive state has the following characteristics:

a. No SRS is sent in the SCell.
b. No channel state information (channel state information, CSI) of the SCell is reported.
c. No transmission is performed on an uplink shared channel (uplink shared channel, UL-SCH) of the SCell.
d. No transmission is performed on a random access channel (random access channel, RACH) of the SCell.
e. No PDCCH sent in the SCell is detected, where the PDCCH may be used to schedule the SCell or another SCell.
f. No PDCCH used to schedule the SCell is detected, where the PDCCH may be sent in another cell, or may be sent in the SCell.
g. No PUCCH is transmitted in the SCell.

For a cell, the network device may configure an identifier of the first active downlink BWP by using an RRC information element firstActiveDownlinkBWP-Id, and may configure an identifier of the first active uplink BWP by using an RRC information element firstActiveUplinkBWP-Id. When the cell enters the active state from the inactive state, the downlink BWP whose ID is firstActiveDownlinkBWP-Id and the uplink BWP whose ID is firstActiveUplinkBWP-Id are activated. It should be noted that firstActiveDownlinkBWP-Id may be configured as an ID of a dormant BWP, that is, dormantBWP-Id.

9. Downlink control information

A PDCCH carries the DCI, and the DCI has a plurality of DCI formats (DCI format).

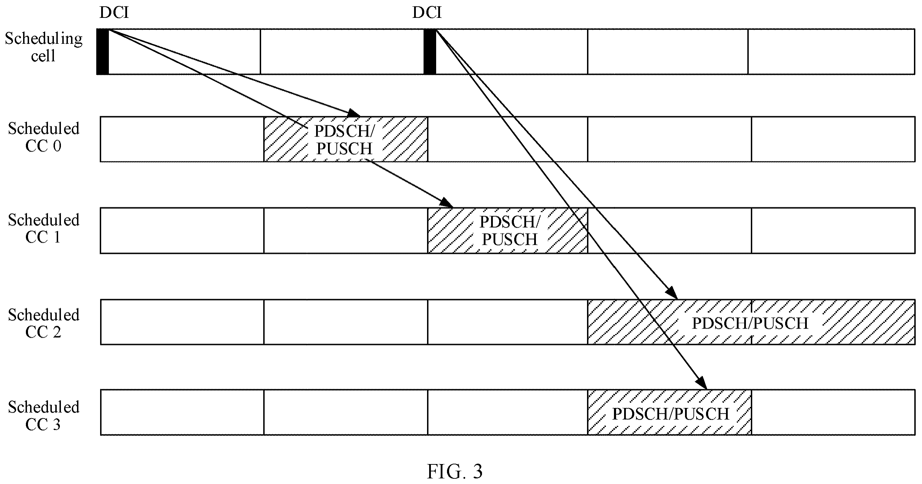

The DCI format includes a single-cell scheduling DCI format and a multi-cell scheduling DCI format. The single-cell scheduling DCI format may be used to schedule data transmission of one carrier. The multi-cell scheduling DCI format may be used to simultaneously schedule data transmission of one or more carriers. When the multi-cell scheduling DCI format is used to simultaneously schedule data transmission of a plurality of carriers, data transmission in different cells may have same or different start time, and same or different end time. As shown in FIG. 3, DCI may be used to simultaneously schedule a CC 0 and a CC 1, or DCI may be used to simultaneously schedule a CC 2 and a CC 3. When the DCI is used to simultaneously schedule the CC 0 and the CC 1, data transmission has different start time and different end time. When the DCI is used to simultaneously schedule the CC 2 and the CC 3, data transmission has same start time but different end time.

The data transmission of the plurality of cells simultaneously scheduled in the multi-cell scheduling DCI format may all be downlink data transmission, or may all be uplink data transmission, or may include uplink data transmission of a part of cells and downlink data transmission of another part of cells.

Table 1 shows a part of DCI formats of single-cell scheduling DCI and their purposes. The DCI format of the single-cell scheduling DCI may be referred to as a single-cell scheduling DCI format for short.

Table 1

| DCI format | Purpose |
|---|---|
| 0_0 | PUSCH scheduling in one cell |
| 0_1 | PUSCH scheduling in one cell |
| 0_2 | PUSCH scheduling in one cell |
| 1_0 | PDSCH scheduling in one cell |
| 1_1 | PDSCH scheduling in one cell |
| 1_2 | PDSCH scheduling in one cell |

Table 2 shows DCI formats of multi-cell scheduling DCI and their purposes. The DCI format of the multi-cell scheduling DCI may be referred to as a multi-cell scheduling DCI format for short.

Table 2

| DCI format | Purpose |
|---|---|
| 0_X | PUSCH scheduling in one or more cells |
| 1_X | PDSCH scheduling in one or more cells |

The multi-cell scheduling DCI format 0_X can be used to simultaneously schedule uplink data transmission of two or more cells. The multi-cell scheduling DCI format 1_X can be used to simultaneously schedule downlink data transmission of two or more cells. In Table 2, X may be a specific number. For example, X may be 5. In this case, the DCI formats in Table 2 may be DCI 0_5 and DCI 1_5. This is not limited in this application.

Content of the downlink control information may include but is not limited to the following content:

(1) Carrier indicator field

The carrier indicator field (carrier indicator field, CIF) is present in the DCI format 0_1/0_2/1_1/1_2. When cross-carrier scheduling occurs between cells, and a plurality of scheduled cells may be scheduled, DCI carried on a PDCCH sent in a scheduling cell may include a CIF. Different CIF bit values are configured for different scheduled carrier combinations by using higher layer signaling. After receiving a piece of DCI, the terminal may determine, based on a CIF bit value, a scheduled carrier scheduled by using this piece of DCI. It may be understood that, the terminal may determine, based on the CIF bit value, a cell in which the scheduled carrier scheduled by using this piece of DCI is located, that is, a scheduled cell. In this application, for a field including a plurality of bits, a bit value of the field is a value of a bit sequence of the field. The CIF bit value may be exchanged with a CIF value.

The carrier indicator field in the DCI format 0_1/1_1 has 0 or 3 bits (bit), and a configuration parameter cif-Presence for a scheduling cell indicates whether the CIF is present.

The carrier indicator field in the DCI format 0_2/1_2 has 0, 1, 2, or 3 bits, and the network device configures carrierIndicatorSizeDCI-0-2 or carrierIndicatorSizeDCI-1-2. The two parameters define a size of the carrier indicator field in the DCI format 0_2/1_2, that is, a quantity of bits included in the carrier indicator field.

In the DCI format of the multi-cell scheduling DCI, the CIF needs to be redesigned. In this application, an indication field indicating one or more carriers for data transmission is referred to as a first indication field. It should be noted that, in the following descriptions, the CIF is used as an example of the first indication field in the multi-cell scheduling DCI format. The first indication field may alternatively be named in another manner, and the CIF may be replaced with another name. This is not limited in this application.

As shown in Table 3, the CIF is designed to have 2 bits and indicate four carrier combinations. When the CIF bit value is 00, it indicates that a CC 0 is scheduled. When the CIF bit value is 01, it indicates that the CC 0 and a CC 1 are scheduled. When the CIF bit value is 10, it indicates that a CC 2 is scheduled. When the CIF bit value is 11, it indicates that the CC 2 and a CC 3 are scheduled.

The following Table 3 is merely an example, and is not intended to limit this application.

Table 3

| CIF bit value | Scheduled CC(s) |
|---|---|
| 00 | CC 0 |
| 01 | CC 0, CC 1 |
| 10 | CC2 |
| 11 | CC 2, CC 3 |

(2) BWP indicator field

A: Single-cell scheduling DCI format

The BWP indicator field is present in the single-cell scheduling DCI format, that is, the DCI format 0_1/0_2/1_1/1_2. The BWP indicator field occupies 0, 1, or 2 bits, and a quantity of bits occupied by the BWP indicator field is determined by $n_{BWP,RRC}$. Specifically, a bit width of the BWP indicator field is $\left\lceil \log_2(n_{BWP}) \right\rceil$ bits. In the DCI format 0_1 or 0_2, $n_{BWP,RRC}$ is a quantity of uplink BWPs that are configured by using higher layer signaling and that do not include an initial uplink BWP. In the DCI format 1_1 or 1_2, $n_{BWP,RRC}$ is a quantity of downlink BWPs that are configured by using higher layer signaling and that do not include an initial downlink BWP. In this application, the higher layer signaling may be RRC signaling or a medium access control control element (MAC control element, MAC CE).

If $n_{BWP,RRC} = 0$, $n_{BWP} = n_{BWP,RRC} +1$, and the DCI does not include the BWP indicator field.

If $1 \leq n_{BWP,RRC} \leq 3$, $n_{BWP} = n_{BWP,RRC} + 1$. In this case, a sequence of BWPs indicated by bit values of the BWP indicator field is determined in ascending order of higher layer parameters BWP-Id. The bit value of the BWP indicator field may be exchanged with a value of the BWP indicator field.

For example, when $n_{BWP,RRC} = 1$, if a BWP 0 and a BWP 1 are configured on a CC, the BWP indicator field includes 1 bit, a bit value 0 of the BWP indicator field corresponds to the BWP 0, and a bit value 1 of the BWP indicator field corresponds to the BWP 1. When $n_{BWP,RRC} = 2$, if a BWP 0, a BWP 1, and a BWP 2 are configured on a CC, the BWP indicator field includes 2 bits, a bit value 00 of the BWP indicator field corresponds to the BWP 0, a bit value 01 of the BWP indicator field corresponds to the BWP 1, and a bit value 10 of the BWP indicator field corresponds to the BWP 2. When $n_{BWP,RRC} = 3$, if a BWP 0, a BWP 1, a BWP 2, and BWP 3 are configured on a CC, the BWP indicator field includes 2 bits, a bit value 00 of the BWP indicator field corresponds to the BWP 0, a bit value 01 of the BWP indicator field corresponds to the BWP 1, a bit value 10 of the BWP indicator field corresponds to the BWP 2, and a bit value 11 of the BWP indicator field corresponds to the BWP 3.

For another example, when $n_{BWP,RRC} = 3$, if a BWP 0, a BWP 1, and a BWP 4 are configured on a CC, the BWP indicator field includes 2 bits, a bit value 00 of the BWP indicator field corresponds to the BWP 0, a bit value 01 of the BWP indicator field corresponds to the BWP 1, and a bit value 10 of the BWP indicator field corresponds to the BWP 4.

Otherwise, if $n_{BWP,RRC} = 4$, $n_{BWP} = n_{BWP,RRC}$. In this case, a definition of the BWP indicator field, that is, a correspondence between the BWP indicator field and BWPs, is shown in Table 4.

Table 4

| Bit value of the BWP indicator field | BWP |
|---|---|
| 00 | BWP 1 |
| 01 | BWP 2 |
| 10 | BWP 3 |
| 11 | BWP 4 |

The BWP 0 is an initial BWP, the BWP 1 is a BWP that is configured by using RRC and whose BWP-Id is equal to 1, the BWP 2 is a BWP that is configured by using RRC and whose BWP-Id is equal to 2, the BWP 3 is a BWP that is configured by using RRC and whose BWP-Id is equal to 3, and the BWP 4 is a BWP that is configured by using RRC and whose BWP-Id is equal to 4.

B: Multi-cell scheduling DCI format

At a recent 3GPP meeting, it is determined that the BWP indicator field in the multi-cell scheduling DCI format has the following characteristics:

(1) A size of the BWP indicator field in the multi-cell scheduling DCI format is 0, 1, or 2 bits, and the size of the BWP indicator field in the multi-cell scheduling DCI format is a maximum value in sizes of BWP indicator fields in single-cell scheduling DCI formats corresponding to all cells related to the multi-cell scheduling DCI format. The size of the BWP indicator field is a quantity of bits included in the BWP indicator field.

(2) The BWP indicator field in the multi-cell scheduling DCI format takes effect for a cell in which a size of a BWP indicator field in a single-cell scheduling DCI format includes 1 or 2 bits (in other words, for a cell in which a single-cell scheduling DCI format does not include a BWP indicator field, that is, only one BWP is configured, the BWP indicator field in the multi-cell scheduling DCI format does not take effect).

(3) The BWP indicator field in the multi-cell scheduling DCI format is explained for each cell separately.

The multi-cell scheduling DCI format includes an uplink multi-cell scheduling DCI format and a downlink multi-cell scheduling DCI format. The uplink multi-cell scheduling DCI format is used to schedule data transmission of a plurality of uplink carriers of a plurality of cells, and the downlink multi-cell scheduling DCI format is used to schedule data transmission of a plurality of downlink carriers of a plurality of cells.

As shown in Table 5, carriers corresponding to cells that can be scheduled in a multi-cell scheduling DCI format are a CC 0 to a CC 3 respectively. A BWP 0 is configured on the CC 0, and the BWP 0 is an initial BWP. In this case, $n_{BWP,RRC}$ =0. Therefore, a size of a BWP indicator field in a single-cell scheduling DCI format corresponding to the CC 0 is 0 bits. The BWP 0 and a BWP 1 are configured on the CC 1, and the BWP 0 is an initial BWP. In this case, $n_{BWP,RRC}$ = 1, $n_{BWP,RRC}$ =1<3, and $n_{BWP} = n_{BWP,RRC}$ + 1 =2. Therefore, a size of a BWP indicator field in a single-cell scheduling DCI format corresponding to the CC 1 is 1 bit. The BWP 0, the BWP 1, and a BWP 2 are configured on the CC 2, and the BWP 0 is an initial BWP. In this case, $n_{BWP,RRC}$ = 2, $n_{BWP,RRC}$ = 2<3, and $n_{BWP} = n_{BWP,RRC}$ + 1 =3. Therefore, a size of a BWP indicator field in a single-cell scheduling DCI format corresponding to the CC 2 is 2 bits. The BWP 0, the BWP 1, the BWP 2, and a BWP 3 are configured on the CC 3, and the BWP 0 is an initial BWP. In this case, $n_{BWP,RRC}$ = 3, and $n_{BWP} = n_{BWP,RRC}$ + 1 =4. Therefore, a size of a BWP indicator field in a single-cell scheduling DCI format corresponding to the CC 3 is 2 bits.

Because the sizes of the BWP indicator fields in the single-cell scheduling DCI formats corresponding to the CC 2 and the CC 3 are 2 bits, a size of a BWP indicator field in the multi-cell scheduling DCI format is 2 bits. Regardless of a value of the BWP indicator field, the BWP indicator field does not take effect for the CC 0, and an active BWP of the CC 0 is the BWP 0.

Table 5

| Bit value of the BWP indicator field | 00 | 01 | 10 | 11 |
|---|---|---|---|---|
| CC 0 | BWP 0 | BWP 0 | BWP 0 | BWP 0 |
| CC 1 | BWP 0 | BWP 1 | | |
| CC 2 | BWP 0 | BWP 1 | BWP 2 | |
| CC 3 | BWP 0 | BWP 1 | BWP 2 | BWP 3 |

As shown in Table 6, carriers corresponding to cells that can be scheduled in a multi-cell scheduling DCI format are a CC 0 to a CC 3 respectively. It can be learned from above that a size of a BWP indicator field in a single-cell scheduling DCI format corresponding to the CC 0 is 0 bits, a size of a BWP indicator field in a single-cell scheduling DCI format corresponding to the CC 1 is 1 bit, and a size of a BWP indicator field in a single-cell scheduling DCI format corresponding to the CC 2 is 2 bits. A BWP 0, a BWP 1, a BWP 2, a BWP 3, and a BWP 4 are configured on the CC 3, and the BWP 0 is an initial BWP. In this case, $n_{BWP} = n_{BWP,RRC}$ =4. Therefore, a size of a BWP indicator field in a single-cell scheduling DCI format corresponding to the CC 3 is 2 bits.

Because the sizes of the BWP indicator fields in the single-cell scheduling DCI formats corresponding to the CC 2 and the CC 3 are 2 bits, a size of a BWP indicator field in the multi-cell scheduling DCI format is 2 bits. Regardless of a value of the BWP indicator field, the BWP indicator field does not take effect for the CC 0, and an active BWP of the CC 0 is the BWP 0.

Table 6

| Bit value of the BWP indicator field | 00 | 01 | 10 | 11 |
|---|---|---|---|---|
| CC 0 | BWP 0 | BWP 0 | BWP 0 | BWP 0 |
| CC 1 | BWP 0 | BWP 1 | | |
| CC 2 | BWP 0 | BWP 1 | BWP 2 | |
| CC 3 | BWP 1 | BWP 2 | BWP 3 | BWP 4 |

In a possible scenario, after BWP switching of a cell, subsequent cell scheduling causes a plurality of times of BWP switching, including BWP switching of the cell or another cell. In addition, because switching is performed at different time, a plurality of switching delays are caused.

Example 1: It is assumed that a multi-cell scheduling DCI format can be used to schedule four cells, and carriers corresponding to the cells that can be scheduled in the multi-cell scheduling DCI format are a CC 0 to a CC 3 respectively. A size of a CIF in the multi-cell scheduling DCI format is 2 bits, and the 2 bits indicate four carrier combinations, as shown in Table 7.

Table 7

| CIF bit value | Scheduled CC(s) |
|---|---|
| 00 | CC 0, CC 1 |
| 01 | CC 1 |
| 10 | CC 1, CC 2 |
| 11 | CC 1, CC 3 |

One BWP is configured on the CC 0, two BWPs are configured on the CC 1, three BWPs are configured on the CC 2, and four BWPs are configured on the CC 3. A size of a BWP indicator field in the multi-cell scheduling DCI format is 2 bits, and indication of the BWP indicator field is shown in Table 5.

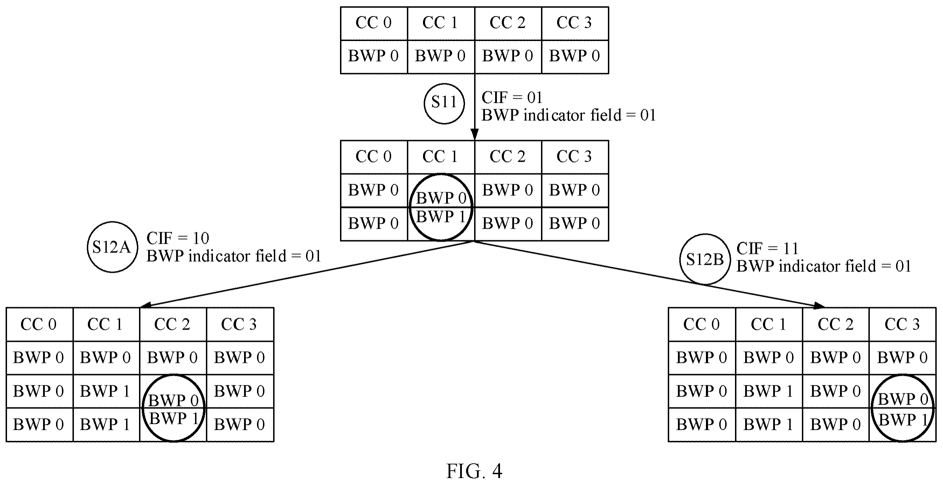

It is assumed that current active BWPs of the CC 0, the CC 1, the CC 2, and the CC 3 are all the BWP 0. For details of the following process, refer to FIG. 4.

S11: UE receives a piece of DCI, where CIF = 01, BWP indicator field = 01, and the CIF is used to schedule the CC 1. In this case, the CC 1 is switched from the BWP 0 to the BWP 1. In this case, BWP switching is not performed on the CC 2 or the CC 3, and the active BWPs are still the BWP 0.

S12A: Based on S11, if the UE receives another piece of DCI, where CIF = 10, BWP indicator field = 01, and the CIF is used to schedule the CC 1 and the CC 2, the CC 2 needs to be switched from the BWP 0 to the BWP 1. Herein, one BWP switching is performed, and there is a BWP switching delay.

S12B: Based on S11, if the UE receives another piece of DCI, where CIF = 11, BWP indicator field = 01, and the CIF is used to schedule the CC 1 and the CC 3, the CC 3 needs to be switched from the BWP 0 to the BWP 1. Herein, one BWP switching is performed, and there is a BWP switching delay.

It can be learned from above that, the active BWP of the CC 1 is switched from the BWP 0 to the BWP 1 in S11, and subsequent S12A causes the active BWP of the CC 2 to be switched from the BWP 0 to the BWP 1, or subsequent S12B causes the active BWP of the CC 3 to be switched from the BWP 0 to the BWP 1, resulting in a new switching delay.

In another possible scenario, when a cell enters the active state from the inactive state or enters the non-dormant state from the dormant state, the cell determines the first active BWP according to an existing protocol stipulation, and subsequent cell scheduling causes a plurality of times of BWP switching, including BWP switching of the cell or another cell. In addition, because switching is performed at different time, a plurality of switching delays are caused.

Currently, when a cell enters the active state from the inactive state, the first active BWP is determined based on firstActiveDownlinkBWP-Id and firstActiveUplinkBWP-Id that are configured by using higher layer signaling. When a cell enters the non-dormant state from the dormant state, the first active downlink BWP is determined based on first-WithinActiveTimeBWP-Id or firstOutsideActiveTimeBWP-Id configured by using higher layer signaling.

Example 2: It is assumed that a multi-cell scheduling DCI format can be used to schedule four cells, and carriers corresponding to the cells that can be scheduled in the multi-cell scheduling DCI format are a CC 0 to a CC 3 respectively. A size of a CIF in the multi-cell scheduling DCI format is 2 bits, and the 2 bits indicate four carrier combinations, as shown in Table 7. A size of a BWP indicator field in the multi-cell scheduling DCI format is 2 bits, and indication of the BWP indicator field is shown in Table 5.

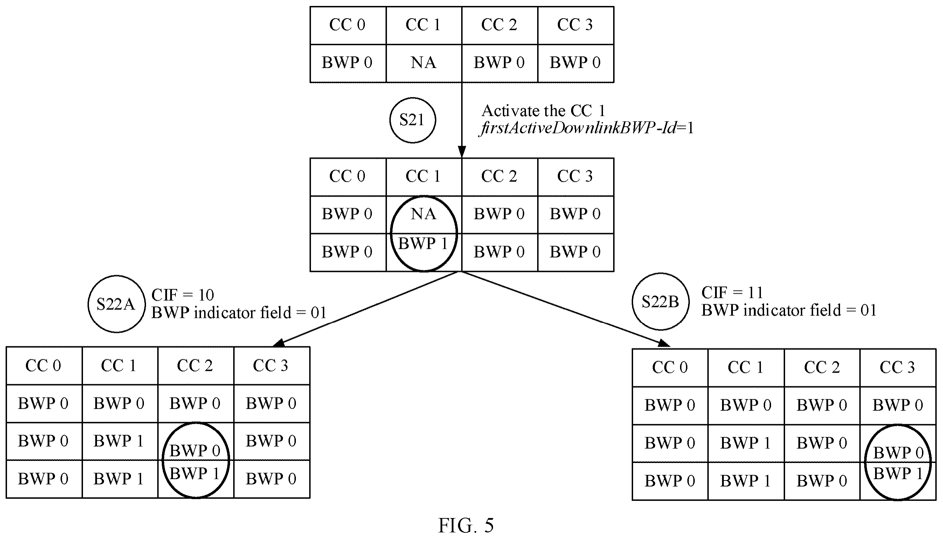

It is assumed that current active BWPs of the CC 0, the CC 2, and the CC 3 are all the BWP 0, and a cell corresponding to the CC 1 is in the inactive state. For details of the following process, refer to FIG. 5.

S21: The cell corresponding to the CC 1 enters the active state from the inactive state, and the first active downlink BWP may be determined based on firstActiveDownlinkBWP-Id=1. Therefore, the first active downlink BWP of the CC 1 is the BWP 1.

S22A: Based on S21, if the UE receives a piece of DCI, where CIF = 10, BWP indicator field = 00, and the CIF is used to schedule the CC 1 and the CC 2, the CC 1 needs to be switched from the BWP 1 to the BWP 0. Herein, one BWP switching is performed, and there is a BWP switching delay.

S22B: Based on S21, if the UE receives a piece of DCI, where CIF = 11, BWP indicator = 00, and the CIF is used to schedule the CC 1 and the CC 3, the CC 1 needs to be switched from the BWP 1 to the BWP 0. Herein, one BWP switching is performed, and there is a BWP switching delay.

It can be learned from above that when the cell corresponding to the CC 1 enters the active state from the inactive state, it is determined, based on firstActiveDownlinkBWP-Id=1, that the first active BWP of the CC 1 is the BWP 1, and subsequent S22A causes the active BWP of the CC 1 to be switched from the BWP 1 to the BWP 0, or subsequent S22B causes the active BWP of the CC 1 to be switched from the BWP 1 to the BWP 0, resulting in a new switching delay.

In addition, the BWP indicator field in the multi-cell scheduling DCI format is explained for each cell separately. However, when the CIF indicates that a CC is scheduled, but there is no BWP corresponding to a value of the BWP indicator field on the CC, how to understand which BWP is used on the CC to perform data transmission is also a problem worthy of attention.

For example, with reference to Table 7, in Table 8, when CIF = 11 and BWP indicator field = 11, the BWP 3 of the CC 3 is scheduled, but the CIF also indicates that the CC 1 is scheduled. However, in the previous mapping manner between the BWP indicator field and the BWPs, there is no BWP corresponding to BWP indicator field = 11 on the CC 1. Then, how to understand data scheduling on the CC 1? In addition, positions with a question mark in Table 8 all have a problem similar thereto.

Table 8

| Bit value of the BWP indicator field | 00 | 01 | 10 | 11 |
|---|---|---|---|---|
| CC 0 | BWP 0 | BWP 0 | BWP 0 | BWP 0 |
| CC 1 | BWP 0 | BWP 1 | ? | ? |
| CC 2 | BWP 0 | BWP 1 | BWP 2 | ? |
| CC 3 | BWP 0 | BWP 1 | BWP 2 | BWP 3 |

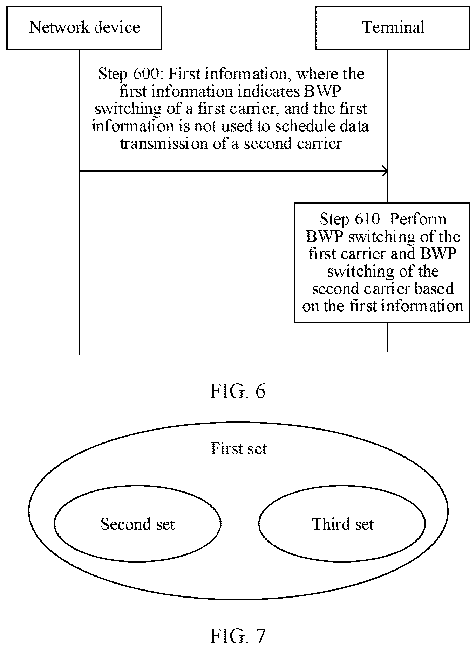

Based on this, this application provides a BWP switching method, to resolve a problem that after BWP switching of a cell, subsequent cell scheduling may cause a plurality of times of BWP switching, resulting in a plurality of switching delays. As shown in FIG. 6, the method includes the following steps.

Step 600: A network device sends first information to a terminal. Correspondingly, the terminal receives the first information from the network device.

The first information indicates BWP switching of a first carrier, the first information is not used to schedule data transmission of a second carrier, and the first carrier and the second carrier are configured in different cells. That the first carrier and the second carrier are configured in different cells may be understood as that the first carrier and the second carrier are carriers configured for different cells, or the first carrier and the second carrier are carriers of different cells.

For the foregoing step 600, the following several points need to be noted:

(1) Both the first carrier and the second carrier are uplink carriers, or both the first carrier and the second carrier are downlink carriers.

Therefore, this embodiment of this application is different from a TDD scenario in which BWP switching of a downlink carrier of a cell causes BWP switching of an uplink carrier, or BWP switching of an uplink carrier causes BWP switching of a downlink carrier. In this application, if the first carrier is an uplink carrier, and the terminal performs BWP switching of the first carrier, the second carrier is also an uplink carrier, and the terminal also performs BWP switching of the second carrier. If the first carrier is a downlink carrier, and the terminal performs BWP switching of the first carrier, the second carrier is also a downlink carrier, and the terminal also performs BWP switching of the second carrier.

(2) At least two BWPs are configured on the second carrier.

In a possible design, the at least two BWPs include a dormant BWP. In other words, a dormant BWP may be configured on the second carrier. In this case, the first information does not indicate to switch an active downlink BWP of the second carrier from a non-dormant BWP to a dormant BWP, and the first information does not indicate to switch the active downlink BWP of the second carrier from a dormant BWP to a non-dormant BWP. The second carrier is a downlink carrier.

In another possible design, the at least two BWPs do not include a dormant BWP. In other words, no dormant BWP is configured on the second carrier. The second carrier is a downlink carrier or an uplink carrier.

In another possible design, in addition to a dormant BWP, at least two BWPs are configured on the second carrier. The second carrier is a downlink carrier.

(3) The first information is DCI.

For example, the first information is single-cell scheduling DCI or multi-cell scheduling DCI. Alternatively, it may be understood that a DCI format corresponding to the first information can be used to schedule data transmission of one carrier, or the DCI format corresponding to the first information can be used to simultaneously schedule data transmission of two or more carriers. A DCI format of the single-cell scheduling DCI may be one of a DCI format 0_1, a DCI format 0_2, a DCI format 1_1, and a DCI format 1_2.

It should be noted that the first information is all downlink control information carried on a downlink control channel used to carry the first information. For example, the first information does not include a dormancy indication field.

(4) The first information explicitly indicates BWP switching of the first carrier, but does not explicitly indicate BWP switching of the second carrier. It may also be understood that the first information explicitly indicates BWP switching of the first carrier, and implicitly indicates BWP switching of the second carrier.

For a manner of explicitly indicating BWP switching by using DCI (that is, the first information), refer to the following manner 1 and manner 2.

Manner 1: The DCI includes a first indication field and a second indication field. The first indication field indicates one or more carriers for data transmission, and the second indication field indicates a BWP on which the data transmission is performed. For any one of the one or more carriers indicated by the first indication field, the second indication field indicates one BWP. When the BWP indicated by the second indication field is different from a current active BWP of the carrier, the first indication field and the second indication field jointly explicitly indicate BWP switching of the carrier.

In addition, the DCI may further include a third indication field, and the third indication field indicates whether the DCI is used to perform uplink data scheduling or downlink data scheduling. In this case, the first indication field, the second indication field, and the third indication field may jointly indicate whether BWP switching of the carrier is uplink BWP switching or downlink BWP switching.

Manner 2: The DCI includes a dormancy indication field, and a higher layer indicates a cell or a cell group corresponding to a bit in the dormancy indication field. If the bit in the dormancy indication field indicates that the corresponding cell or cell group enters a dormant state from a non-dormant state, it is explicitly indicated that an active downlink BWP of the cell or the cell group is switched from a non-dormant BWP to a dormant BWP. If the bit in the dormancy indication field indicates that the corresponding cell or cell group enters the non-dormant state from the dormant state, it is explicitly indicated that the active downlink BWP of the cell or the cell group is switched from a dormant BWP to a non-dormant BWP.

When the first information explicitly indicates BWP switching of the first carrier, it may be understood that BWP switching of the first carrier is indicated in either of the foregoing two manners. When the first information does not explicitly indicate BWP switching of the second carrier, or the first information implicitly indicates BWP switching of the second carrier, it may be understood that BWP switching of the second carrier is indicated in neither of the foregoing two manners.

(5) The first information is used to schedule data transmission of the first carrier.

For example, the first information includes a first indication field, and the first indication field indicates one or more carriers for data transmission. The one or more carriers herein include the first carrier, but do not include the second carrier. Alternatively, it may be understood that the first information includes a first indication field whose value is a first value, and the first indication field whose value is the first value indicates one or more carriers for data transmission. The one or more carriers herein include the first carrier, but do not include the second carrier. For example, the first indication field is a CIF.

For example, the first information is single-cell scheduling DCI, and a DCI format of the DCI may be one of the DCI format 0_1, the DCI format 0_2, the DCI format 1_1, and the DCI format 1_2. First indication fields in the DCI format 0_1, the DCI format 0_2, the DCI format 1_1, and the DCI format 1_2 indicate only one carrier. The first information includes a first indication field whose value is a first value, and the first indication field whose value is the first value indicates only the first carrier.

For example, the first information is multi-cell scheduling DCI. A first indication field in a multi-cell scheduling DCI format indicates one or more carriers. The first information includes a first indication field whose value is a first value, and the first indication field whose value is the first value indicates only the first carrier, or indicates the first carrier and one or more other carriers other than the second carrier.

(6) For the first carrier and the second carrier, BWPs corresponding to values of a same BWP indicator field have a same subcarrier spacing.

Step 610: The terminal performs BWP switching of the first carrier and BWP switching of the second carrier based on the first information, where both a BWP before the BWP switching and a BWP after the BWP switching of the second carrier are non-dormant BWPs.

In this application, a BWP before switching and a BWP after switching are respectively an active BWP before switching and an active BWP after switching. Specifically, the BWP before switching and the BWP after switching are respectively an active uplink BWP before switching and an active uplink BWP after switching, or an active downlink BWP before switching and an active downlink BWP after switching. The BWP before switching is the last active BWP before switching, and the BWP after switching is the first active BWP after switching.

In this application, BWP switching is active BWP switching, and may be specifically active downlink BWP switching or active uplink BWP switching. The active BWP switching further includes two scenarios: switching between non-dormant BWPs, and switching between a dormant BWP and a non-dormant BWP.

First scenario: Switching between non-dormant BWPs

For example, the first information indicates BWP switching of the first carrier, and neither a BWP before the switching nor a BWP after the switching of the first carrier is a dormant BWP. For example, the first information does not include a dormancy indication field or the first information does not include a dormant indication, or the first information does not include an indication of switching an active downlink BWP from a non-dormant BWP to a dormant BWP or from a dormant BWP to a non-dormant BWP in a cell in which the first carrier is located. Alternatively, the first information includes a dormancy indication field, but the dormancy indication field does not indicate to perform dormancy state switching in the cell in which the first carrier is located.

In a possible implementation, when the terminal performs BWP switching of the second carrier based on the first information, the terminal performs BWP switching of the second carrier based on a value of a BWP indicator field in the first information. At least two BWPs are configured on the second carrier, a BWP of the second carrier after the BWP switching corresponds to the value of the BWP indicator field in the first information, and the BWP of the second carrier after the BWP switching is different from a BWP of the second carrier before the BWP switching, which may be understood as that a BWP, corresponding to the value of the BWP indicator field in the first information, of the second carrier is different from the BWP of the second carrier before the BWP switching. For example, when the first information indicates an uplink BWP of the first carrier, an uplink BWP, corresponding to the value of the BWP indicator field in the first information, of the second carrier is different from an uplink BWP of the second carrier before the BWP switching. For another example, when the first information indicates a downlink BWP of the first carrier, a downlink BWP, corresponding to the value of the BWP indicator field in the first information, of the second carrier is different from a downlink BWP of the second carrier before the BWP switching.

Alternatively, it may be understood that before the terminal performs BWP switching of the second carrier based on the first information, the terminal determines, based on the value of the BWP indicator field in the first information, whether the BWP corresponding to the value of the BWP indicator field in the first information is configured on the second carrier. If the BWP corresponding to the value of the BWP indicator field in the first information exists in the at least two BWPs configured on the second carrier, an active BWP of the second carrier is switched to the BWP corresponding to the value of the BWP indicator field in the first information. Specifically, if the BWP corresponding to the value of the BWP indicator field in the first information exists in the at least two BWPs configured on the second carrier, and the BWP is not a dormant BWP, the active BWP of the second carrier is switched to the BWP corresponding to the value of the BWP indicator field in the first information. Further, in a TDD mode, uplink and downlink BWPs of a cell are configured in pairs. Therefore, if the second carrier is a TDD carrier and the second carrier is a downlink carrier, when an active downlink BWP of the second carrier is switched to the downlink BWP, corresponding to the value of the BWP indicator field in the first information, of the second carrier, an uplink BWP is also switched to an uplink BWP corresponding to the downlink BWP.

If the at least two BWPs configured on the second carrier do not include the BWP corresponding to the value of the BWP indicator field in the first information, the BWP of the second carrier is switched to a BWP 0, or is switched to a BWP with a maximum ID in the BWPs configured on the second carrier, or is switched to a BWP indicated by the network device, or the BWP of the second carrier may not be switched.

BWPs of the first carrier before and after the BWP switching are both non-dormant BWPs, or IDs of the BWPs of the first carrier before and after the BWP switching are not IDs of configured dormant BWPs. BWPs of the second carrier before and after the BWP switching are both non-dormant BWPs, or IDs of the BWPs of the second carrier before and after the BWP switching are not IDs of configured dormant BWPs.

Second scenario: Switching between a dormant BWP and a non-dormant BWP

For example, the first information indicates BWP switching of the first carrier, and the first information indicates that a BWP of the first carrier is switched from a dormant BWP to a non-dormant BWP.

In a possible implementation, when the terminal performs BWP switching of the second carrier based on the first information, the terminal performs BWP switching of the second carrier based on a value of a BWP indicator field corresponding to a target BWP to which the first carrier is switched. At least two BWPs are configured on the second carrier, a BWP of the second carrier after the BWP switching corresponds to the value of the BWP indicator field corresponding to the target BWP to which the first carrier is switched, and the BWP of the second carrier after the BWP switching is different from a BWP of the second carrier before the BWP switching, which may be understood as that the value of the BWP indicator field corresponding to the target BWP to which the first carrier is switched is different from a value of a BWP indicator field corresponding to an active BWP of the second carrier before the BWP switching.

For example, a value of a BWP indicator field corresponding to a target active downlink BWP to which the first carrier is switched is different from a value of a BWP indicator field corresponding to an active downlink BWP of the second carrier before the BWP switching. For another example, when the first carrier is a TDD carrier, a value of a BWP indicator field corresponding to a target active uplink BWP to which the first carrier is switched is different from a value of a BWP indicator field corresponding to an active uplink BWP of the second carrier before the BWP switching. In addition, when there are a plurality of values of the BWP indicator field corresponding to the target BWP to which the first carrier is switched, BWP switching of the second carrier may be performed based on a minimum value or a maximum value in the plurality of values.

Alternatively, it may be understood that before the terminal performs BWP switching of the second carrier based on the first information, the terminal determines, based on the value (set to a first value) of the BWP indicator field corresponding to the target BWP to which the first carrier is switched, whether a BWP (set to a third BWP) corresponding to the first value of the BWP indicator field is configured on the second carrier. If the at least two BWPs configured on the second carrier include the third BWP, the active BWP of the second carrier is switched to the third BWP.

If the at least two BWPs configured on the second carrier do not include the third BWP, the BWP of the second carrier is switched to a BWP 0, or is switched to a BWP with a maximum ID in the configured BWPs, or is switched to a BWP indicated by the network device, or the BWP of the second carrier may not be switched.

In addition, when the first information indicates BWP switching of the first carrier and the first information indicates that the BWP of the first carrier is switched from a non-dormant BWP to a dormant BWP, generally, the BWP of the second carrier is not switched from a non-dormant BWP to a dormant BWP, that is, the second carrier does not enter the dormant state.

In a possible design, when the first carrier and the second carrier belong to a first set, the terminal performs BWP switching of the second carrier based on the first information. "The first carrier and the second carrier belong to the first set" is described as "the first carrier and the second carrier meet a condition A" below. Alternatively, it may be understood that before performing BWP switching of the second carrier, the terminal determines whether both the first carrier and the second carrier belong to the first set. If either of the first carrier and the second carrier does not belong to the first set, BWP switching of the second carrier is not performed. Alternatively, it is understood that the terminal determines that the second carrier that belongs to the first set as the first carrier exists, and then performs BWP switching of the second carrier.

Specifically, the first set is a set of carriers that can be scheduled in a first DCI format, and the first DCI format can be used to simultaneously schedule data transmission of two or more carriers.

For example, the first DCI format is a multi-cell scheduling DCI format, and a first indication field in the first DCI format indicates one or more carriers for data transmission. The first set includes all carriers that can be indicated by all possible values of the first indication field. For example, for Table 7, the first set includes the CC 0, the CC 1, the CC 2, and the CC 3. In this application, the "first DCI format" may be exchanged with "DCI whose DCI format is the first DCI format".

According to the foregoing method, when the terminal performs BWP switching of the first carrier, BWP switching may also be performed on another carrier other than the first carrier in the carriers that can be scheduled in the first DCI format. Therefore, BWPs of a plurality of carriers can be simultaneously switched, to reduce implementation complexity of the terminal, and improve BWP switching efficiency. The another carrier herein does not include a carrier on which only one BWP is configured, or a carrier on which no BWP corresponding to the value of the BWP indicator field is configured.

Further, the first carrier and the second carrier can be simultaneously indicated by using a value of the first indication field in the first DCI format. "The first carrier and the second carrier can be simultaneously indicated by using a value of the first indication field in the first DCI format" is described as "the first carrier and the second carrier meet a condition A1" below.

As shown in Table 7, the CC 0 and the CC 1 may be simultaneously indicated by CIF=00 in DCI, the CC 1 and the CC 2 may be simultaneously indicated by CIF=10 in DCI, and the CC 1 and the CC 3 may be simultaneously indicated by CIF=11 in DCI. Therefore, when the first carrier is the CC 0, the second carrier may be the CC 1. When the first carrier is the CC 1, the second carrier may be the CC 0, the CC 2, or the CC 3. When the first carrier is the CC 2, the second carrier may be the CC 1. When the first carrier is the CC 3, the second carrier may be the CC 1.

As shown in Table 9, the CC 0 and the CC 1 may be simultaneously indicated by CIF=00 in DCI, or may be simultaneously indicated by CIF=11 in DCI; the CC 0 and the CC 2 may be simultaneously indicated by CIF=01 in DCI; the CC 1 and the CC 2 may be simultaneously indicated by CIF=10 in DCI; the CC 0 and the CC 3 may be simultaneously indicated by CIF=11 in DCI; and the CC 1 and the CC 3 may be simultaneously indicated by CIF=11 in DCI. Therefore, when the first carrier is the CC 0, the second carrier may be the CC 1, the CC 2, or the CC 3. When the first carrier is the CC 1, the second carrier may be the CC 0, the CC 2, or the CC 3. When the first carrier is the CC 2, the second carrier may be the CC 0 or the CC 1. When the first carrier is the CC 3, the second carrier may be the CC 0 or the CC 1.

Table 9

| CIF bit value | Scheduled CC(s) |
|---|---|
| 00 | CC 0, CC 1 |
| 01 | CC 0, CC 2 |
| 10 | CC 1, CC 2 |
| 11 | CC 0, CC 1, CC 3 |

Alternatively, the first carrier and the second carrier belong to a second set. "The first carrier and the second carrier belong to the second set" is described as "the first carrier and the second carrier meet a condition A2" below. The second set is a subset of the first set, and a quantity of carriers included in the second set is greater than or equal to 2. For a third carrier in the second set, there is at least one carrier in the second set that together with the third carrier can be simultaneously indicated by using a value of the first indication field in the first DCI format, and the third carrier and another carrier in the first set other than the second set cannot be simultaneously indicated by using any value of the first indication field. The third carrier is any carrier in the second set.

The second set may be a proper subset of the first set. That is, in addition to the second set, the first set further includes a third set, and the third set is a proper subset of the first set.

A relationship between the first set, the second set, and the third set is shown in FIG. 7. The second set and the third set meet the following condition 1, condition 2, and condition 3.

Condition 1: The second set and the third set have no intersection.

Condition 2: If the quantity of carriers in the second set is greater than or equal to 2, for any carrier in the second set, there is another carrier in the second set that together with the any carrier may be simultaneously indicated by using a value of the first indication field in the first DCI format.

If a quantity of carriers in the third set is greater than or equal to 2, for any carrier in the third set, there is another carrier in the third set that together with the any carrier may be simultaneously indicated by using a value of the first indication field in the first DCI format.

Condition 3: When one carrier is selected from each of the second set and the third set, the two selected carriers definitely cannot be simultaneously indicated by using any value of the first indication field in the first DCI format.

As shown in Table 3, the first set is the CC 0, the CC 1, the CC 2, and the CC 3, the second set is the CC 0 and the CC 1, and the third set is the CC 2 and the CC 3. When the first carrier is the CC 0, the second carrier may be the CC 1. When the first carrier is the CC 1, the second carrier may be the CC 0. When the first carrier and the second carrier meet the condition A2, unnecessary BWP switching can be avoided. To be specific, when BWP switching is performed on the CC 0, BWP switching needs to be performed only on the CC 1, and BWP switching does not need to be performed on the CC 2 or the CC 3, because neither the CC 2 nor the CC 3 is indicated together with the CC 0 by using one piece of DCI to perform data transmission, in other words, neither the CC 2 nor the CC 3 is scheduled together with the CC 0 by using one BWP indicator field.

In addition, the first set may further include a fourth set, a fifth set, or the like. This is not limited in this application. In other words, the first set may include a plurality of subsets, and any two of the plurality of subsets meet the following condition 1* to condition 3*:

Condition 1*: Any two of the plurality of subsets have no intersection.

Condition 2*: When a quantity of carriers in one of the plurality of subsets is greater than or equal to 2, for any carrier in the subset, there is another carrier in the subset that together with the any carrier may be simultaneously indicated by using a value of the first indication field in the first DCI format.

Condition 3*: For any two or more of the plurality of subsets, if one carrier is selected from each of the two or more subsets, the selected carriers definitely cannot be simultaneously indicated by using any value of the first indication field in the first DCI format.

As shown in Table 10, a first set includes a CC 0 to a CC 5. According to the foregoing condition 1* to condition 3*, the first set may include three subsets, where a second set includes the CC 0 and the CC 1, a third set includes the CC 2 and the CC 3, and a fourth set includes the CC 4 and the CC 5.

The CC 0 and the CC 1 belong to a same set, the CC 0 and the CC 1 may be simultaneously indicated by CIF=01 in DCI, and the CC 0 cannot be simultaneously indicated with another CC other than the CC 1 by using any CIF bit value (in other words, the CC 0 cannot be simultaneously indicated with a CC in another set by using any CIF bit value). When the first carrier is the CC 0, the second carrier may be the CC 1. When the first carrier is the CC 1, the second carrier may be the CC 0.

Similarly, the CC 2 and the CC 3 belong to a same set, the CC 2 and the CC 3 may be simultaneously indicated by CIF=10 in DCI, and the CC 2 cannot be simultaneously indicated with another CC other than the CC 3 by using any CIF bit value (in other words, the CC 2 cannot be simultaneously indicated with a CC in another set by using any CIF bit value). When the first carrier is the CC 2, the second carrier may be the CC 3. When the first carrier is the CC 3, the second carrier may be the CC 2.

Similarly, the CC 4 and the CC 5 belong to a same set, the CC 4 and the CC 5 may be simultaneously indicated by CIF=11 in DCI, and the CC 4 cannot be simultaneously indicated with another CC other than the CC 5 by using any CIF bit value (in other words, the CC 4 cannot be simultaneously indicated with a CC in another set by using any CIF bit value). When the first carrier is the CC 4, the second carrier may be the CC 5. When the first carrier is the CC 5, the second carrier may be the CC 4.

Table 10

| CIF bit value | Scheduled CC(s) |
|---|---|
| 00 | CC 1 |
| 01 | CC 0, CC 1 |
| 10 | CC 2, CC 3 |
| 11 | CC 4, CC 5 |

As shown in Table 11, a first set includes a CC 0 to a CC 7. According to the foregoing condition 1* to condition 3*, the first set may include three subsets, where a second set includes the CC 0, the CC 1, and the CC 2, a third set includes the CC 3, the CC 4, and the CC 5, and a fourth set includes the CC 6 and the CC 7.

Any two of the second set, the third set, and the fourth set do not have an intersection, that is, do not include a common carrier. All the three sets meet the condition 1*.

For the second set, a quantity of carriers in the second set is greater than 2. For the CC 0, the CC 1 and the CC 0 are simultaneously indicated by CIF=000 in DCI. For the CC 1, the CC 0 and the CC 1 are simultaneously indicated by CIF=000 in DCI. For the CC 2, the CC 1 and the CC 2 are simultaneously indicated by CIF=001 in DCI. The condition 2* is met.

For the third set, a quantity of carriers in the third set is greater than 2. For the CC 3, the CC 4 and the CC 3 are simultaneously indicated by CIF=010 in DCI. For the CC 4, the CC 3 and the CC 4 are simultaneously indicated by CIF=010 in DCI. For the CC 5, the CC 3 and the CC 5 are simultaneously indicated by CIF=011 in DCI. The condition 2* is met.

For the fourth set, a quantity of carriers in the fourth set is equal to 2. For the CC 6, the CC 7 and the CC 6 are simultaneously indicated by CIF=110 in DCI. For the CC 7, the CC 6 and the CC 7 are simultaneously indicated by CIF=110 in DCI. The condition 2* is met.

For the second set, the third set, and the fourth set, if one carrier is selected from each of two or more of the subsets, the selected carriers definitely cannot be simultaneously indicated by using any value of the first indication field in the first DCI format. The condition 3* is met.

Table 11

| CIF bit value | Scheduled CC(s) |
|---|---|
| 000 | CC 0, CC 1 |
| 001 | CC 1, CC 2 |
| 010 | CC 3, CC 4 |
| 011 | CC 3, CC 5 |
| 100 | CC 3, CC 4, CC 5 |
| 101 | CC 6 |
| 110 | CC 6, CC 7 |

Alternatively, the first carrier and the second carrier belong to a sixth set. "The first carrier and the second carrier belong to the sixth set" is described as "the first carrier and the second carrier meet a condition A3" below. The sixth set may be a subset of the first set. Related descriptions of the first set are not repeated herein. The network device may send second information to the terminal, the second information indicates the sixth set, and the sixth set includes the first carrier and the second carrier. After the terminal receives the second information, if BWP switching of a carrier in the sixth set needs to be performed, BWP switching of another carrier in the sixth set is also performed together. Specifically, when performing BWP switching of the first carrier, the terminal also performs BWP switching of the second carrier.

The following describes the embodiment shown in FIG. 6 in detail with reference to a specific example.

Example 1*: Similar to the scenario of Example 1, it is assumed that a multi-cell scheduling DCI format can be used to schedule four cells, and carriers corresponding to the cells that can be scheduled in the multi-cell scheduling DCI format are a CC 0 to a CC 3 respectively. A size of a CIF in the multi-cell scheduling DCI format is 2 bits, and the 2 bits indicate four carrier combinations, as shown in Table 7.

One BWP is configured on the CC 0, two BWPs are configured on the CC 1, three BWPs are configured on the CC 2, and four BWPs are configured on the CC 3. A size of a BWP indicator field in the multi-cell scheduling DCI format is 2 bits, and indication of the BWP indicator field is shown in Table 5.

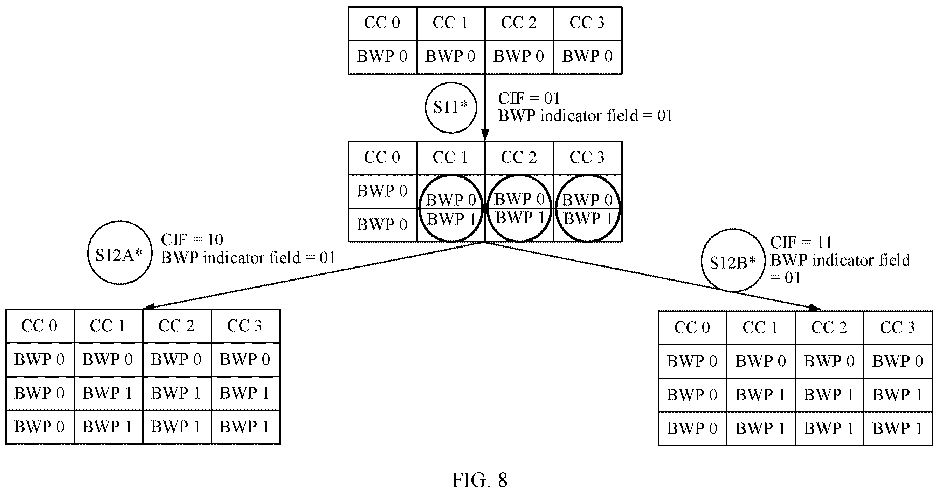

Assuming that a relationship between the CCs is constrained by using the condition A, the first set includes the CC 0 to the CC 3. Current active BWPs of the CC 0, the CC 1, the CC 2, and the CC 3 are all the BWP 0. For details of the following process, refer to FIG. 8. In addition, the relationship between the CCs may alternatively be constrained by using the condition A1, the condition A2, or the condition A3. This is not limited in this application.

S11*: UE receives a piece of DCI, where CIF = 01, and BWP indicator field = 01. In this case, the CIF is used to schedule the CC 1, and the CC 1 is switched from the BWP 0 to the BWP 1. Because the CC 1, the CC 2, and the CC 3 belong to the first set, both the CC 2 and the CC 3 are switched to the BWP 1. Herein, there is one BWP switching delay. BWP switching of a plurality of cells is performed at a same moment without additional BWP switching delays.

S12A*: Based on S11, if the UE receives another piece of DCI, where CIF = 10, BWP indicator field = 01, and the CIF is used to schedule the CC 1 and the CC 2, no BWP switching is performed, and there is no BWP switching delay.

S12B*: Based on S11, if the UE receives another piece of DCI, where CIF = 11, BWP indicator field = 01, and the CIF is used to schedule the CC 1 and the CC 3, no BWP switching is performed, and there is no BWP switching delay.

It can be learned that, in Example 1, BWP switching is performed in each of the three steps S11, S12A, and S12B, and there is a BWP switching delay in each step. However, according to the technical solution provided in this embodiment of this application, in Example 1*, only in S11*, BWP switching is performed and there is a BWP switching delay. Therefore, the technical solution provided in this embodiment of this application can reduce BWP switching delays in comparison with the foregoing Example 1.

According to the foregoing method, when the first information indicates BWP switching of the first carrier, and the first information is not used to schedule data transmission of the second carrier, the terminal may be triggered to switch a BWP of the second carrier based on the first information, so that a plurality of BWP switching delays that may be caused by subsequent cell scheduling can be reduced.

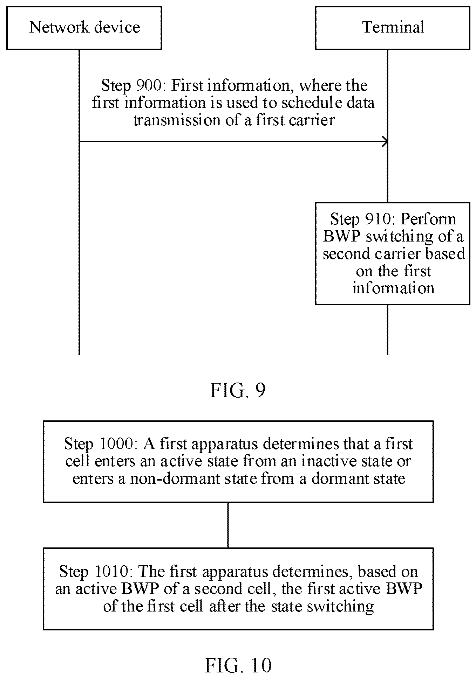

This application provides a BWP switching method, to resolve a problem that subsequent cell scheduling may cause a plurality of times of BWP switching, resulting in a plurality of switching delays. As shown in FIG. 9, the method includes the following steps.

Step 900: A network device sends first information to a terminal. Correspondingly, the terminal receives the first information from the network device.

The first information is used to schedule data transmission of a first carrier. The first information is not used to schedule data transmission of a second carrier. The first carrier and the second carrier are configured in different cells.

In addition, refer to related content in the several points noted for step 600. Details are not described herein again.

Step 910: The terminal performs BWP switching of the second carrier based on the first information, where both a BWP before the BWP switching and a BWP after the BWP switching of the second carrier are non-dormant BWPs.

For example, the terminal performs BWP switching of the second carrier based on the first information, but does not perform BWP switching of the first carrier.

For example, when the terminal performs BWP switching of the second carrier based on the first information, the terminal performs BWP switching of the second carrier based on a value of a BWP indicator field corresponding to an active BWP of the first carrier, or the terminal performs BWP switching of the second carrier based on a value of a BWP indicator field. The first information includes the BWP indicator field, and the value of the BWP indicator field is the same as the value of the BWP indicator field corresponding to the active BWP of the first carrier. For example, the first information does not indicate BWP switching of the first carrier.

At least two BWPs are configured on the second carrier, and the value of the BWP indicator field corresponding to the active BWP of the first carrier is different from a value of a BWP indicator field corresponding to an active BWP of the second carrier before the BWP switching. It may be understood that the value of the BWP indicator field corresponding to the active BWP of the first carrier corresponds to an active BWP of the second carrier after the BWP switching, and the active BWP of the second carrier before the BWP switching is different from the active BWP of the second carrier after the BWP switching.

In a possible design, when the first carrier and the second carrier meet a condition A, a condition A1, a condition A2, or a condition A3, the terminal performs BWP switching of the second carrier based on the first information. For specific descriptions of the condition A, the condition A1, the condition A2, or the condition A3 met by the first carrier and the second carrier, refer to the foregoing related content. Details are not described herein again.

According to the foregoing method, when the first information is used to schedule data transmission of the first carrier, BWP switching of the second carrier may be triggered, so that a plurality of BWP switching delays that may be caused by subsequent cell scheduling can be reduced.

This application further provides a communication method, to resolve a problem that subsequent cell scheduling may cause a plurality of times of BWP switching, resulting in a plurality of switching delays. When a BWP inactivity timer associated with an active downlink BWP of a first carrier expires, a terminal performs BWP switching of the first carrier and BWP switching of a second carrier.

In an example, if the active downlink BWP of the first carrier is switched to a default downlink BWP, the terminal performs BWP switching of the second carrier based on a value of a BWP indicator field corresponding to the default downlink BWP. At least two BWPs are configured on the second carrier, and the value of the BWP indicator field corresponding to the default downlink BWP is different from a value of a BWP indicator field corresponding to an active BWP of the second carrier before the BWP switching. It may be understood that the value of the BWP indicator field corresponding to the default downlink BWP corresponds to an active BWP of the second carrier after the BWP switching, and the active BWP of the second carrier before the BWP switching is different from the active BWP of the second carrier after the BWP switching.

Alternatively, if no default downlink BWP is configured, and the active downlink BWP of the first carrier is switched to an initial downlink BWP, the terminal performs BWP switching of the second carrier based on a value of a BWP indicator field corresponding to the initial downlink BWP. At least two BWPs are configured on the second carrier, and the value of the BWP indicator field corresponding to the initial downlink BWP is different from a value of a BWP indicator field corresponding to an active BWP of the second carrier before the BWP switching. It may be understood that the value of the BWP indicator field corresponding to the initial downlink BWP corresponds to an active BWP of the second carrier after the BWP switching, and the active BWP of the second carrier before the BWP switching is different from the active BWP of the second carrier after the BWP switching.

In a possible design, when the first carrier and the second carrier meet a condition A, a condition A1, a condition A2, or a condition A3, the terminal performs BWP switching of the second carrier. For descriptions of the condition A, the condition A1, the condition A2, or the condition A3 met by the first carrier and the second carrier, refer to the foregoing related content. Details are not described herein again.

According to the foregoing method, when the BWP inactivity timer associated with the active downlink BWP of the first carrier expires, because the terminal needs to perform BWP switching of the first carrier, BWP switching of the second carrier is triggered, so that a plurality of BWP switching delays that may be caused by subsequent cell scheduling can be reduced.

This application further provides a communication method. The method includes: monitoring a first DCI format, where the first DCI format can be used to simultaneously schedule data transmission of two or more carriers, the carriers that can be scheduled in the first DCI format include a first carrier and a second carrier, the first carrier and the second carrier meet a condition A, a condition A1, a condition A2, or a condition A3, and BWPs corresponding to values of a same BWP indicator field on the first carrier and the second carrier have a same subcarrier spacing.

For descriptions of the condition A, the condition A1, the condition A2, or the condition A3 met by the first carrier and the second carrier, refer to the foregoing related content. Details are not described herein again.

In other words, when the first carrier and the second carrier meet the condition A, the condition A1, the condition A2, or the condition A3, a network device needs to configure the first carrier and the second carrier to meet the following condition: In the first DCI format, BWPs corresponding to values of a same BWP indicator field on the first carrier and the second carrier have a same subcarrier spacing.

Alternatively, in the carriers that can be scheduled in the first DCI format, for the first carrier and the second carrier that meet the condition A, the condition A1, the condition A2, or the condition A3, the network device needs to ensure that a BWP on the first carrier and a BWP on the second carrier that correspond to values of a same BWP indicator field have a same subcarrier spacing.

This application further provides a communication method, to resolve a problem that when a cell enters an active state from an inactive state or enters a non-dormant state from a dormant state, subsequent cell scheduling causes a plurality of times of BWP switching, resulting in a plurality of switching delays.

A first apparatus in the following method may be a terminal or a chip in the terminal, or a network device or a chip in the network device. As shown in FIG. 10, the method includes the following steps.

Step 1000: A first apparatus determines that a first cell enters an active state from an inactive state or enters a non-dormant state from a dormant state.

Step 1010: The first apparatus determines, based on an active BWP of a second cell, the first active BWP of the first cell after the state switching.

The first cell is different from the second cell. The second cell is in the active state, and the second cell is in the non-dormant state.

A first carrier is a downlink carrier of the first cell, and a second carrier is a downlink carrier of the second cell; or the first carrier is an uplink carrier of the first cell, and the second carrier is an uplink carrier of the second cell.

For example, when the first active BWP of the first cell is determined based on the active BWP of the second cell, the first active BWP of the first cell is determined based on the active BWP of the second cell when the first carrier and the second carrier meet a condition A, a condition A1, a condition A2, or a condition A3. Alternatively, before determining the first active BWP of the first cell based on the active BWP of the second cell, the terminal determines that the first carrier and the second carrier meet the condition A, the condition A1, the condition A2, or the condition A3. The first carrier is a carrier configured for the first cell, and the second carrier is a carrier configured for the second cell. For descriptions of the condition A, the condition A1, the condition A2, or the condition A3 met by the first carrier and the second carrier, refer to the foregoing related content. Details are not described herein again.

When the first cell enters the active state from the inactive state or enters the non-dormant state from the dormant state, and the first carrier and the second carrier meet the condition A, the condition A1, the condition A2, or the condition A3, the first active BWP of the first cell is determined based on the active BWP of the second cell. In other words, when the first cell enters the active state from the inactive state or enters the non-dormant state from the dormant state, the first active BWP of the first cell is determined based on whether the second carrier that together with the first carrier meets the condition A, the condition A1, the condition A2, or the condition A3 exists. If the second carrier that together with the first carrier meets the condition A, the condition A1, the condition A2, or the condition A3 exists, the first active BWP of the first cell is determined based on the active BWP of the second carrier. If the second carrier that together with the first carrier meets the condition A, the condition A1, the condition A2, or the condition A3 does not exist, the first active BWP of the first carrier is determined based on higher layer signaling configuration. The first carrier is a carrier configured for the first cell, and the second carrier is a carrier configured for the second cell.

In a possible implementation, when the first cell enters the active state from the inactive state, the first active downlink BWP of the first cell after the state switching is determined based on an active downlink BWP of the second cell, and/or the first active uplink BWP of the first cell after the state switching is determined based on an active uplink BWP of the second cell. When the first active downlink BWP of the first cell after the state switching is determined based on the active downlink BWP of the second cell, a value of a BWP indicator field corresponding to the first active downlink BWP of the first cell after the state switching is the same as a value of a BWP indicator field corresponding to the active downlink BWP of the second cell. When the first active uplink BWP of the first cell after the state switching is determined based on the active uplink BWP of the second cell, a value of a BWP indicator field corresponding to the first active uplink BWP of the first cell after the state switching is the same as a value of a BWP indicator field corresponding to the active uplink BWP of the second cell.

In a possible implementation, when the first cell enters the non-dormant state from the dormant state, the first non-dormant active downlink BWP of the first cell after the state switching is determined based on a non-dormant active downlink BWP of the second cell, and/or the first non-dormant active uplink BWP of the first cell after the state switching is determined based on a non-dormant active uplink BWP of the second cell.

The following describes the embodiment shown in FIG. 10 in detail with reference to a specific example.

Example 2*: Similar to the scenario of Example 2, it is assumed that a multi-cell scheduling DCI format can be used to schedule four cells, and carriers corresponding to the cells that can be scheduled in the multi-cell scheduling DCI format are a CC 0 to a CC 3 respectively. A size of a CIF in the multi-cell scheduling DCI format is 2 bits, and the 2 bits indicate four carrier combinations, as shown in Table 7. A size of a BWP indicator field in the multi-cell scheduling DCI format is 2 bits, and indication of the BWP indicator field is shown in Table 5.

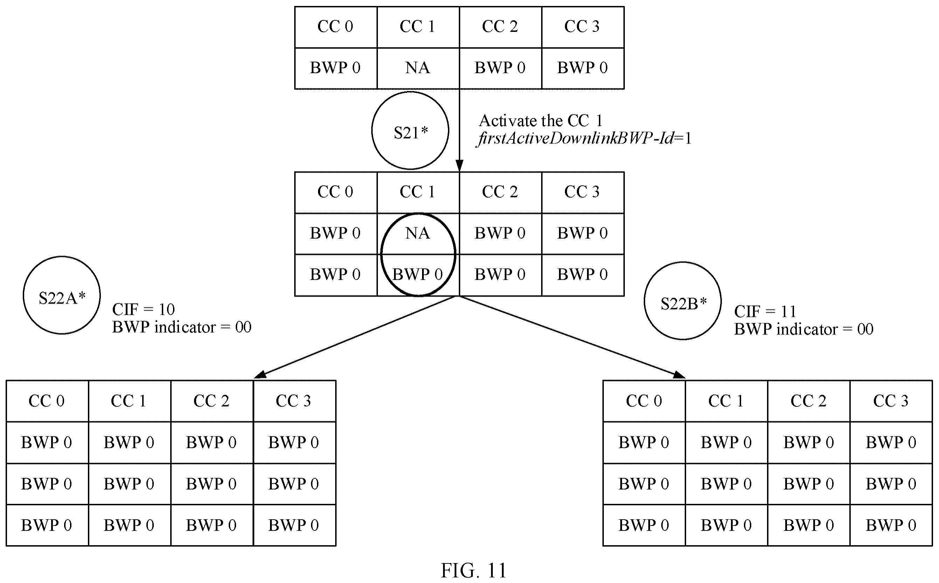

It is assumed that current active BWPs of the CC 0, the CC 2, and the CC 3 are all the BWP 0, and a cell corresponding to the CC 1 is in the inactive state. Assuming that a relationship between the CCs is constrained by using the condition A, the first set includes the CC 0 to the CC 3. For details of the following process, refer to FIG. 11. In addition, the relationship between the CCs may alternatively be constrained by using the condition A1, the condition A2, or the condition A3. This is not limited in this application.

S21*: The cell corresponding to the CC 1 enters the active state from the inactive state. Because an active BWP of a second carrier (which may be the CC 2 or the CC 3) is the BWP 0, the first active downlink BWP of the CC 1 is the BWP 0.

S22A*: Based on S21*, if the UE receives a piece of DCI, where CIF = 10, BWP indicator field = 00, and the CIF is used to schedule the CC 1 and the CC 2, no BWP switching is performed herein, and there is no delay.

S22B*: Based on S21*, if the UE receives a piece of DCI, where CIF = 11, BWP indicator = 00, and the CIF is used to schedule the CC 1 and the CC 3, no BWP switching is performed herein, and there is no delay.

It can be learned that in Example 2, BWP switching is performed in each of the two steps S22A and S22B, and there is a BWP switching delay in each step. However, according to the technical solution provided in this embodiment of this application, in Example 2*, in S22A* and S22B*, no BWP switching is performed, and there is no BWP delay.

Therefore, the technical solution provided in this embodiment of this application can reduce BWP switching delays in comparison with the foregoing Example 2.

According to the foregoing method, when a cell enters an active state from an inactive state or enters a non-dormant state from a dormant state, the first active BWP of the cell is determined based on an active BWP of another cell, so that a plurality of BWP switching delays that may be caused by subsequent cell scheduling can be reduced.

This application further provides several embodiments, to resolve the following problem worthy of attention: when there is no BWP corresponding to a value of a BWP indicator field on a scheduled carrier, how to understand which BWP is used on the scheduled carrier to perform data transmission.

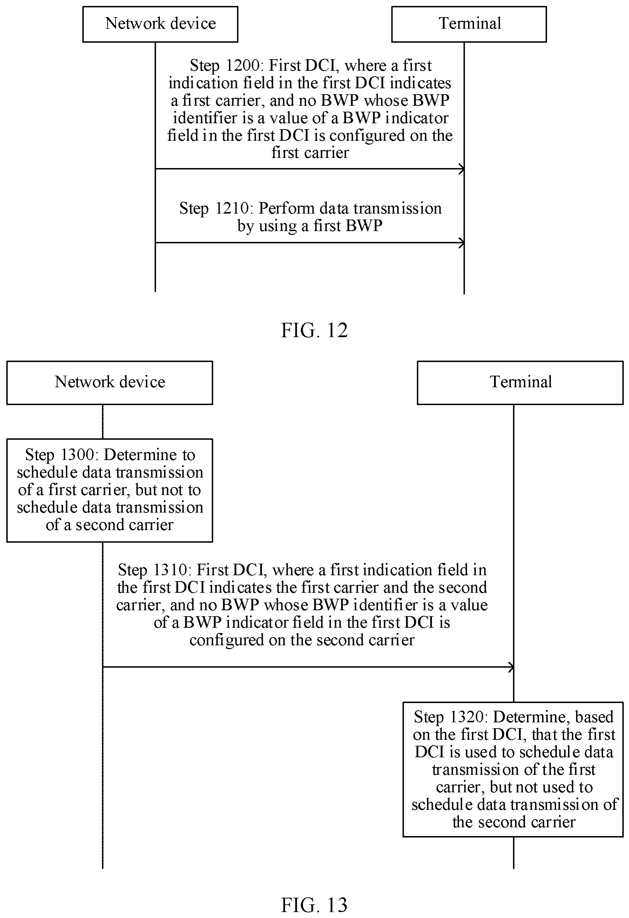

Embodiment 1: As shown in FIG. 12, the method includes the following steps.

Step 1200: A network device sends first DCI.

A first indication field in the first DCI indicates a first carrier, no BWP whose BWP identifier is a value of a BWP indicator field in the first DCI is configured on the first carrier, and the first indication field indicates one or more carriers for data transmission.

For example, that no BWP whose BWP identifier is the value of the BWP indicator field in the first DCI is configured on the first carrier may be understood as follows: The value of the BWP indicator field is 2, a BWP whose BWP identifier is 1 is configured on the first carrier, and no BWP whose BWP identifier is 2 is configured on the first carrier.

Alternatively, the value of the BWP indicator field is 3, a BWP whose BWP identifier is 1 is configured on the first carrier, and no BWP whose BWP identifier is 3 is configured on the first carrier.

Alternatively, the value of the BWP indicator field is 3, a BWP whose BWP identifier is 1 and a BWP whose BWP identifier is 2 are configured on the first carrier, and no BWP whose BWP identifier is 3 is configured on the first carrier.

Step 1210: The network device performs data transmission by using a first BWP, where the first BWP is one of BWPs configured on the first carrier.

For example, the first BWP may be determined by using, but not limited to, the following solutions:

Solution 1:

Two BWPs are configured on the first carrier: a BWP 0 and a BWP 1, and the first BWP may be determined by using, but not limited to, the following solutions:

Solution 1.1: When BWP indicator field = 10, the first BWP is the BWP 0. When BWP indicator field = 11, the first BWP is the BWP 1.

Solution 1.2: When BWP indicator field = 10, the first BWP is the BWP 1. When BWP indicator field = 11, the first BWP is the BWP 0.

Solution 1.3: If the BWP indicator field includes 2 bits, the first BWP is determined by using 1 least significant bit. To be specific, when BWP indicator field = 10, the first BWP is a BWP corresponding to BWP indicator field = 00, that is, the BWP 0. When BWP indicator field = 11, the first BWP is a BWP corresponding to BWP indicator field = 01, that is, the BWP 1.

Solution 2:

Three BWPs are configured on the first carrier: a BWP 0, a BWP 1, and a BWP 2. When BWP indicator field = 11, the first BWP may be any one of the BWP 0, the BWP 1, or the BWP 2.

Solution 3:

A BWP identifier of the first BWP is determined based on the value of the BWP indicator field and a total quantity of BWPs configured on the first carrier.

For example, BWP ID of the first BWP = mod (Value of the BWP indicator field, Total quantity of BWPs configured on the first carrier).

In addition, the network device may send RRC signaling to a terminal. The RRC signaling indicates a BWP that is configured on the first carrier and that corresponds to the value of the BWP indicator field, that is, indicates the first BWP. For example, the RRC signaling indicates BWPs that are configured on the first carrier and that respectively correspond to a plurality of values of the BWP indicator field, where the BWP that is configured on the first carrier and that corresponds to the value of the BWP indicator field is the first BWP.

In the foregoing solutions, a mapping relationship between the BWP indicator field and the BWP configured on the first carrier can be explicitly indicated.

It may be understood that the foregoing solutions are merely examples and are not intended to limit this application.

According to the foregoing method, when there is no BWP corresponding to a value of a BWP indicator field on a scheduled carrier, which BWP on the scheduled carrier is used to perform data transmission can be determined.

Embodiment 2:

A network device may configure a first BWP and a second BWP of a first carrier. A BWP identifier of the first BWP is different from a BWP identifier of the second BWP, and all other configuration information is the same. Alternatively, it may be understood that the network device may further configure two BWP identifiers for one carrier.

It is stipulated in a protocol that a first DCI format can be used to simultaneously schedule data transmission of two or more carriers, a first indication field indicates one or more carriers for data transmission, and when the first indication field indicates the first carrier, there is definitely a BWP corresponding to a value of a BWP indicator field on the first carrier. A carrier on which only one BWP is configured is not limited thereto, because the BWP indicator field is ignored for the carrier on which only one BWP is configured.

As shown in Table 12, only two BWPs, including a BWP 0 and a BWP 1, are configured on a CC 1, and only three BWPs, including the BWP 0, the BWP 1, and a BWP 2, are configured on a CC 2. The network device expects that BWP indicator field = 10 may indicate the BWP 0 on the CC 1, and BWP indicator field = 11 may indicate the BWP 1 on the CC 1 and the BWP 0 on the CC 2. In this case, the BWP 2 and a BWP 3 are configured for the CC 1. A BWP ID of the BWP 0 is different from a BWP ID of the BWP 2, and all other configuration information is the same. A BWP ID of the BWP 1 is different from a BWP ID of the BWP 3, and all other configuration information is the same. The BWP 3 is configured for the CC 2. The BWP ID of the BWP 0 is different from the BWP ID of the BWP 3, and all other configuration information is the same.

Table 12

| Bit value of the BWP indicator field | 00 | 01 | 10 | 11 |
|---|---|---|---|---|
| CC 0 | BWP 0 | BWP 0 | BWP 0 | BWP 0 |
| CC 1 | BWP 0 | BWP 1 | BWP 2 | BWP 3 |
| CC 2 | BWP 0 | BWP 1 | BWP 2 | BWP 3 |
| CC 3 | BWP 0 | BWP 1 | BWP 2 | BWP 3 |

According to the foregoing method, when there is no BWP corresponding to a value of a BWP indicator field on a scheduled carrier, which BWP on the scheduled carrier is used to perform data transmission can be determined.

Embodiment 3:

A first DCI format can be used to simultaneously schedule data transmission of two or more carriers, a first indication field indicates one or more carriers for data transmission, and when the first indication field indicates a first carrier and a second carrier, if a BWP corresponding to a value of a BWP indicator field is configured on the first carrier, and no BWP corresponding to the value of the BWP indicator field is configured on the second carrier, a terminal discards first DCI.

If the terminal finds that a protocol stipulation is not met, the DCI is considered as a false alarm and discarded. For a specific protocol stipulation, refer to related descriptions in Embodiment 2.

It is assumed that a multi-cell scheduling DCI format can be used to schedule four cells, and carriers corresponding to the cells that can be scheduled in the multi-cell scheduling DCI format are a CC 0 to a CC 3 respectively. A size of a CIF in the multi-cell scheduling DCI format is 2 bits, and the 2 bits indicate four carrier combinations, as shown in Table 7. One BWP is configured on the CC 0, two BWPs are configured on the CC 1, three BWPs are configured on the CC 2, and four BWPs are configured on the CC 3. A size of a BWP indicator field in the multi-cell scheduling DCI format is 2 bits, and indication of the BWP indicator field is shown in Table 5.

A network device sends first DCI. In the first DCI, CIF = 11 and BWP indicator field = 11. Because no BWP whose BWP ID is BWP indicator field = 11 is configured on the CC 1, the terminal discards the first DCI.

Embodiment 4:

As shown in FIG. 13, the method includes the following steps.

Step 1300: A network device determines to schedule data transmission of a first carrier, but not to schedule data transmission of a second carrier.

Step 1310: The network device sends first DCI, where a first indication field in the first DCI indicates the first carrier and the second carrier, no BWP whose BWP identifier is a value of a BWP indicator field in the first DCI is configured on the second carrier, and the first indication field indicates one or more carriers for data transmission.

Step 1320: A terminal determines, based on the first DCI, that the first DCI is used to schedule data transmission of the first carrier, but not used to schedule data transmission of the second carrier.

It is assumed that a multi-cell scheduling DCI format can be used to schedule four cells, and carriers corresponding to the cells that can be scheduled in the multi-cell scheduling DCI format are a CC 0 to a CC 3. A size of a CIF in the multi-cell scheduling DCI format is 2 bits, and the 2 bits indicate four carrier combinations, as shown in Table 7. One BWP is configured on the CC 0, two BWPs are configured on the CC 1, three BWPs are configured on the CC 2, and four BWPs are configured on the CC 3. A size of a BWP indicator field in the multi-cell scheduling DCI format is 2 bits, and indication of the BWP indicator field is shown in Table 5.

When the network device determines to schedule the CC 3, but not to schedule the CC 1, the network device sends first DCI. In the first DCI, CIF = 11, and BWP indicator field = 11. Because no BWP whose BWP ID is BWP indicator field = 11 is configured on the CC 1, the terminal determines that the first DCI is used to schedule the CC 3, but not used to schedule the CC 1.

According to the foregoing method, when there is no BWP corresponding to a value of a BWP indicator field on a scheduled carrier, which BWP on the scheduled carrier is used to perform data transmission can be determined.

It may be understood that to implement functions in the foregoing embodiments, a base station and a terminal include corresponding hardware structures and/or software modules for performing the functions. A person skilled in the art should be easily aware that, with reference to units and method steps of examples described in embodiments disclosed in this application, this application can be implemented by hardware or a combination of hardware and computer software. Whether a function is performed by hardware or hardware driven by computer software depends on particular application scenarios and design constraints of the technical solutions.

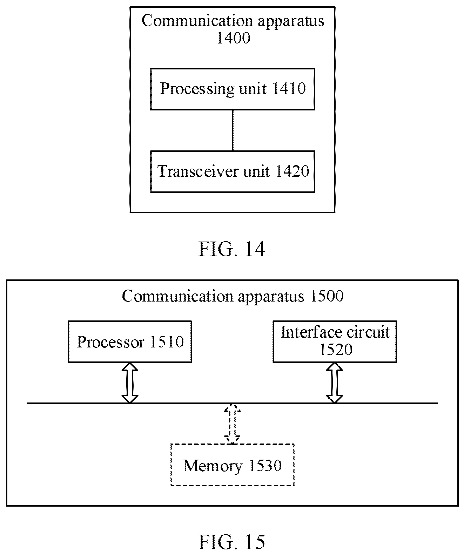

FIG. 14 and FIG. 15 are diagrams of structures of possible communication apparatuses according to embodiments of this application. These communication apparatuses may be configured to implement functions of the terminal or the network device (for example, a base station) in the foregoing method embodiments, and therefore can also achieve beneficial effects of the foregoing method embodiments. In embodiments of this application, the communication apparatus may be one of the terminals 120a to 120j shown in FIG. 1, or may be the base station 110a or 110b shown in FIG. 1, or may be a module (for example, a chip) used in the terminal or the base station.

As shown in FIG. 14, a communication apparatus 1400 includes a processing unit 1410 and a transceiver unit 1420. The communication apparatus 1400 is configured to implement functions of the terminal or the base station in the method embodiment shown in FIG. 6, FIG. 9, FIG. 10, FIG. 12, or FIG. 13.

When the communication apparatus 1400 is configured to implement the functions of the terminal in the method embodiment shown in FIG. 6, the transceiver unit 1420 is configured to receive first information from a network device, where the first information indicates BWP switching of a first carrier, the first information is not used to schedule data transmission of a second carrier, and the first carrier and the second carrier are configured in different cells; and the processing unit 1410 is configured to perform BWP switching of the first carrier and BWP switching of the second carrier based on the first information, where both a BWP before the BWP switching and a BWP after the BWP switching of the second carrier are non-dormant BWPs.

In a possible design, the processing unit 1410 is configured to: when BWP switching of the first carrier and BWP switching of the second carrier are performed based on the first information, perform BWP switching of the first carrier and BWP switching of the second carrier based on a value of a BWP indicator field in the first information. A BWP of the second carrier after the BWP switching corresponds to the value of the BWP indicator field in the first information, at least two BWPs are configured on the second carrier, and the BWP of the second carrier after the BWP switching is different from a BWP of the second carrier before the BWP switching.

In a possible design, when the first carrier and the second carrier belong to a first set, the processing unit 1410 is configured to perform BWP switching of the second carrier based on the first information. The first set is a set of carriers that can be scheduled in a first DCI format, and the first DCI format can be used to simultaneously schedule data transmission of two or more carriers.

In a possible design, the first carrier and the second carrier can be simultaneously indicated by using a value of a first indication field in the first DCI format, and the first indication field indicates a plurality of carriers for data transmission.

In a possible design, the first carrier and the second carrier belong to a second set, the second set is a subset of the first set, and a quantity of carriers included in the second set is greater than or equal to 2. For a third carrier in the second set, there is at least one carrier in the second set that together with the third carrier can be simultaneously indicated by using a value of the first indication field in the first DCI format, and the third carrier and another carrier in the first set other than the second set cannot be simultaneously indicated by using any value of the first indication field. The third carrier is any carrier in the second set, and the first indication field indicates one or more carriers for data transmission.

When the communication apparatus 1400 is configured to implement the functions of the base station in the method embodiment shown in FIG. 6, the processing unit 1410 is configured to schedule the transceiver unit 1420 to send first information to a terminal, where the first information indicates BWP switching of a first carrier, the first information is not used to schedule data transmission of a second carrier, and the first carrier and the second carrier are configured in different cells; and the processing unit 1410 is configured to perform BWP switching of the first carrier and BWP switching of the second carrier, where both a BWP before the BWP switching and a BWP after the BWP switching of the second carrier are non-dormant BWPs, and both a BWP of the first carrier after the BWP switching and the BWP of the second carrier after the BWP switching correspond to the first information.

In a possible design, the first information is used to schedule data transmission of the first carrier.

In a possible design, the BWP of the second carrier after the BWP switching corresponds to a value of a BWP indicator field in the first information, at least two BWPs are configured on the second carrier, and the BWP of the second carrier after the BWP switching is different from the BWP of the second carrier before the BWP switching.

In a possible design, the first carrier and the second carrier belong to a first set, the first set is a set of carriers that can be scheduled in a first DCI format, and the first DCI format can be used to simultaneously schedule data transmission of two or more carriers.

In a possible design, the first carrier and the second carrier can be simultaneously indicated by using a value of a first indication field in the first DCI format, and the first indication field indicates one or more carriers for data transmission.

In a possible design, the first carrier and the second carrier belong to a second set, the second set is a subset of the first set, and a quantity of carriers included in the second set is greater than or equal to 2. For a third carrier in the second set, there is at least one carrier in the second set that together with the third carrier can be simultaneously indicated by using a value of the first indication field in the first DCI format, and the third carrier and another carrier in the first set other than the second set cannot be simultaneously indicated by using any value of the first indication field. The third carrier is any carrier in the second set, and the first indication field indicates one or more carriers for data transmission.

When the communication apparatus 1400 is configured to implement the functions of the base station in the method embodiment shown in FIG. 9, the transceiver unit 1420 sends first information to a terminal, where the first information is used to schedule data transmission of a first carrier, the first information is not used to schedule data transmission of a second carrier, and the first carrier and the second carrier are configured in different cells; and the processing unit 1410 is configured to perform BWP switching of the second carrier, where both a BWP before the BWP switching and a BWP after the BWP switching of the second carrier are non-dormant BWPs, and the BWP of the second carrier after the BWP switching corresponds to the first information.

When the communication apparatus 1400 is configured to implement the functions of the terminal in the method embodiment shown in FIG. 9, the transceiver unit 1420 receives first information from a network device, where the first information is used to schedule data transmission of a first carrier, the first information is not used to schedule data transmission of a second carrier, and the first carrier and the second carrier are configured in different cells; and the processing unit 1410 is configured to perform BWP switching of the second carrier based on the first information, where both a BWP before the BWP switching and a BWP after the BWP switching of the second carrier are non-dormant BWPs.

When the communication apparatus 1400 is configured to implement the functions of the terminal or the base station in the method embodiment shown in FIG. 10, the processing unit 1410 is configured to: determine that a first cell enters an active state from an inactive state or enters a non-dormant state from a dormant state; and determine, based on an active BWP of a second cell, the first active BWP of the first cell after the state switching.

In a possible design, when the first active BWP of the first cell is determined based on the active BWP of the second cell, when the first cell and the second cell belong to a first set, the processing unit 1410 is configured to determine the first active BWP of the first cell based on the active BWP of the second cell. The first set is a set of carriers that can be scheduled in a first DCI format, and the first DCI format can be used to simultaneously schedule data transmission of two or more carriers.

In a possible design, the first carrier and the second carrier can be simultaneously indicated by using a value of a first indication field in the first DCI format, and the first indication field indicates one or more carriers for data transmission.

In a possible design, the first carrier and the second carrier belong to a second set, the second set is a subset of the first set, and a quantity of carriers included in the second set is greater than or equal to 2. For a third carrier in the second set, there is at least one carrier in the second set that together with the third carrier can be simultaneously indicated by using a value of the first indication field in the first DCI format, and the third carrier and another carrier in the first set other than the second set cannot be simultaneously indicated by using any value of the first indication field. The third carrier is any carrier in the second set, and the first indication field indicates one or more carriers for data transmission.

In a possible design, the processing unit 1410 is configured to: when the first active BWP of the first cell after the state switching is determined based on the active BWP of the second cell, when the first cell enters the active state from the inactive state, determine, based on an active downlink BWP of the second cell, the first active downlink BWP of the first cell after the state switching, and/or determine, based on an active uplink BWP of the second cell, the first active uplink BWP of the first cell after the state switching.

In a possible design, the processing unit 1410 is configured to: when the first active BWP of the first cell after the state switching is determined based on the active BWP of the second cell, when the first cell enters the non-dormant state from the dormant state, determine, based on a non-dormant active downlink BWP of the second cell, the first non-dormant active downlink BWP of the first cell after the state switching, and/or determine, based on a non-dormant active uplink BWP of the second cell, the first non-dormant active uplink BWP of the first cell after the state switching.

When the communication apparatus 1400 is configured to implement the functions of the terminal in the method embodiment shown in FIG. 12, the processing unit 1410 is configured to schedule the transceiver unit 1420 to: receive first DCI, where a first indication field in the first DCI indicates a first carrier, no BWP whose BWP identifier is a value of a BWP indicator field in the first DCI is configured on the first carrier, and the first indication field indicates one or more carriers for data transmission; and perform data transmission on a first BWP, where the first BWP is one of BWPs configured on the first carrier.

In a possible design, the transceiver unit 1420 is configured to receive an RRC message, where the RRC message indicates the first BWP.

When the communication apparatus 1400 is configured to implement the functions of the base station in the method embodiment shown in FIG. 12, the processing unit 1410 is configured to schedule the transceiver unit 1420 to: send first DCI, where a first indication field in the first DCI indicates a first carrier, no BWP whose BWP identifier is a value of a BWP indicator field in the first DCI is configured on the first carrier, and the first indication field indicates one or more carriers for data transmission; and perform data transmission on a first BWP, where the first BWP is one of BWPs configured on the first carrier.

In a possible design, the transceiver unit 1420 is configured to send an RRC message, where the RRC message indicates the first BWP.

When the communication apparatus 1400 is configured to implement the functions of the terminal in the method embodiment shown in FIG. 13, the transceiver unit 1420 is configured to receive first DCI, where a first indication field in the first DCI indicates a first carrier and a second carrier, no BWP whose BWP identifier is a value of a BWP indicator field in the first DCI is configured on the second carrier, and the first indication field indicates one or more carriers scheduled by using the first DCI to perform data transmission; and the processing unit 1410 is configured to determine, based on the first DCI, that the first DCI is used to schedule data transmission of the first carrier, but not used to schedule data transmission of the second carrier.

When the communication apparatus 1400 is configured to implement the functions of the base station in the method embodiment shown in FIG. 13, the processing unit 1410 is configured to determine to schedule data transmission of a first carrier, but not to schedule data transmission of a second carrier; and the transceiver unit 1420 is configured to send first DCI, where a first indication field in the first DCI indicates the first carrier and the second carrier, no BWP whose BWP identifier is a value of a BWP indicator field in the first DCI is configured on the second carrier, and the first indication field indicates one or more carriers for data transmission.

As shown in FIG. 15, a communication apparatus 1500 includes a processor 1510 and an interface circuit 1520. The processor 1510 and the interface circuit 1520 are coupled to each other. It may be understood that the interface circuit 1520 may be a transceiver or an input/output interface. Optionally, the communication apparatus 1500 may further include a memory 1530, configured to: store instructions executed by the processor 1510, or store input data required for running instructions by the processor 1510, or data generated after the processor 1510 runs instructions.

When the communication apparatus 1500 is configured to implement the method shown in FIG. 6, FIG. 10, FIG. 12, or FIG. 13, the processor 1510 is configured to implement the functions of the processing unit 1410, and the interface circuit 1520 is configured to implement the functions of the transceiver unit 1420.

When the communication apparatus is a chip used in a terminal, the chip in the terminal implements the functions of the terminal in the foregoing method embodiments. The chip in the terminal receives, via another module (for example, a radio frequency module or an antenna) in the terminal, information sent by a base station to the terminal. Alternatively, the chip in the terminal sends information to another module (for example, a radio frequency module or an antenna) in the terminal, where the information is sent by the terminal to a base station.

When the communication apparatus is a module used in a base station, the module in the base station implements the functions of the base station in the foregoing method embodiments. The module in the base station receives information from another module (for example, a radio frequency module or an antenna) in the base station, where the information is sent by a terminal to the base station. Alternatively, the module in the base station sends information to another module (for example, a radio frequency module or an antenna) in the base station, where the information is sent by the base station to a terminal. The module in the base station herein may be a baseband chip of the base station, may be a CU, a DU, or another module, or may be an apparatus in an open radio access network (open radio access network, O-RAN) architecture, for example, an apparatus such as an open CU or an open DU.

It may be understood that the processor in this embodiment of this application may be a central processing unit (Central Processing Unit, CPU), or may be another general-purpose processor, a digital signal processor (Digital Signal Processor, DSP), an application specific integrated circuit (Application Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any regular processor or the like.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk drive, a removable hard disk drive, a CD-ROM, or any other form of storage medium well-known in the art. For example, the storage medium is coupled to the processor, so that the processor can read information from the storage medium and write information into the storage medium. The storage medium may alternatively be a component of the processor. The processor and the storage medium may be located in an ASIC. In addition, the ASIC may be located in the base station or the terminal. Alternatively, the processor and the storage medium may exist in the base station or the terminal as discrete components.

The foregoing embodiments may be all or partly implemented by using software, hardware, firmware, or any combination thereof. When software is used for implementation, the embodiments may be all or partly implemented in a form of a computer program product. The computer program product includes one or more computer programs or instructions. When the computer program or the instructions are loaded and executed on a computer, the procedures or functions in embodiments of this application are all or partly executed. The computer may be a general-purpose computer, a dedicated computer, a computer network, a network device, user equipment, or another programmable apparatus. The computer program or the instructions may be stored in a computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk drive, or a magnetic tape; or may be an optical medium, for example, a digital video disc; or may be a semiconductor medium, for example, a solid-state drive. The computer-readable storage medium may be a volatile or non-volatile storage medium, or may include both types.

In embodiments of this application, unless otherwise stated or a logic conflict occurs, terms and/or descriptions in different embodiments are consistent and may be mutually referenced, and technical features in different embodiments may be combined based on an internal logical relationship thereof, to form a new embodiment.

In this application, "at least one" means one or more, and "a plurality of" means two or more. The term "and/or" describes an association relationship between associated objects and represents that three relationships may exist. For example, A and/or B may represent the following three cases: Only A exists, both A and B exist, and only B exists, where A and B may be singular or plural. In text descriptions of this application, the character "/" represents an "or" relationship between associated objects. In formulas in this application, the character "/" represents a "division" relationship between associated objects. The expression "including at least one of A, B, and C" may represent as follows: including A; including B; including C; including A and B; including A and C; including B and C; or including A, B, and C.

It may be understood that various numbers in embodiments of this application are merely used for differentiation for ease of description, and are not used to limit the scope of embodiments of this application. Sequence numbers of the foregoing processes do not mean a particular execution sequence, and the execution sequence of the processes should be determined based on functions and internal logic of the processes.

**Claims**

1. A bandwidth part switching method, wherein the method comprises:

   receiving first downlink control information DCI, wherein a first indication field in the first DCI indicates a first cell, no bandwidth part BWP whose BWP identifier is a value of a BWP indicator field in the first DCI is configured in the first cell, and the first indication field indicates one or more cells for data transmission; and
   performing data transmission on a first BWP, wherein the first BWP is a BWP configured in the first cell.

2. The method according to claim 1, wherein three BWPs are configured in the first cell: a BWP 0, a BWP 1, and a BWP 2, and when a value of a bit sequence of the BWP indicator field is "11", the first BWP is any one of the BWP 0, the BWP 1, and the BWP 2.

3. A bandwidth part switching method, wherein the method comprises:

   sending first downlink control information DCI, wherein a first indication field in the first DCI indicates a first cell, no bandwidth part BWP whose BWP identifier is a value of a BWP indicator field in the first DCI is configured in the first cell, and the first indication field indicates one or more cells for data transmission; and

performing data transmission on a first BWP, wherein the first BWP is a BWP configured in the first cell.

4. The method according to claim 3, wherein three BWPs are configured in the first cell: a BWP 0, a BWP 1, and a BWP 2, and when a value of a bit sequence of the BWP indicator field is "11", the first BWP is any one of the BWP 0, the BWP 1, and the BWP 2.

5. A communication apparatus, comprising a processor and an interface circuit, wherein the interface circuit is configured to receive a signal from another communication apparatus and transmit the signal to the processor, or send a signal from the processor to another communication apparatus, and the processor is configured to implement the method according to any one of claims 1 to 4 by using a logic circuit or by executing code instructions.

6. A computer-readable storage medium, wherein the storage medium stores a computer program or instructions, and when the computer program or the instructions are executed by a communication apparatus, the method according to any one of claims 1 to 4 is implemented.

7. A computer program product, wherein the computer program product comprises a computer program, and when the computer program is run on an apparatus, the method according to any one of claims 1 to 4 is performed.

FIG. 1

FIG. 2

FIG. 3

EP 4 661 544 A1

| CC 0 | CC 1 | CC 2 | CC 3 |
|------|------|------|------|
| BWP 0 | BWP 0 | BWP 0 | BWP 0 |

(S11) CIF = 01
BWP indicator field = 01

| CC 0 | CC 1 | CC 2 | CC 3 |
|------|------|------|------|
| BWP 0 | BWP 0 | BWP 0 | BWP 0 |
| BWP 0 | BWP 1 | BWP 0 | BWP 0 |

(S12A) CIF = 10
BWP indicator field = 01

(S12B) CIF = 11
BWP indicator field = 01

| CC 0 | CC 1 | CC 2 | CC 3 |
|------|------|------|------|
| BWP 0 | BWP 0 | BWP 0 | BWP 0 |
| BWP 0 | BWP 1 | BWP 0 | BWP 0 |
| BWP 0 | BWP 1 | BWP 1 | BWP 0 |

| CC 0 | CC 1 | CC 2 | CC 3 |
|------|------|------|------|
| BWP 0 | BWP 0 | BWP 0 | BWP 0 |
| BWP 0 | BWP 1 | BWP 0 | BWP 0 |
| BWP 0 | BWP 1 | BWP 0 | BWP 1 |

FIG. 4

EP 4 661 544 A1

| CC 0 | CC 1 | CC 2 | CC 3 |
|------|------|------|------|
| BWP 0 | NA | BWP 0 | BWP 0 |

S21 — Activate the CC 1
*firstActiveDownlinkBWP-Id*=1

| CC 0 | CC 1 | CC 2 | CC 3 |
|------|------|------|------|
| BWP 0 | NA | BWP 0 | BWP 0 |
| BWP 0 | BWP 1 | BWP 0 | BWP 0 |

S22A — CIF = 10
BWP indicator field = 01

| CC 0 | CC 1 | CC 2 | CC 3 |
|------|------|------|------|
| BWP 0 | BWP 0 | BWP 0 | BWP 0 |
| BWP 0 | BWP 1 | BWP 0 | BWP 0 |
| BWP 0 | BWP 1 | BWP 1 | BWP 0 |

S22B — CIF = 11
BWP indicator field = 01

| CC 0 | CC 1 | CC 2 | CC 3 |
|------|------|------|------|
| BWP 0 | BWP 0 | BWP 0 | BWP 0 |
| BWP 0 | BWP 1 | BWP 0 | BWP 0 |
| BWP 0 | BWP 1 | BWP 0 | BWP 1 |

FIG. 5

FIG. 6

FIG. 7

| CC 0 | CC 1 | CC 2 | CC 3 |
|------|------|------|------|
| BWP 0 | BWP 0 | BWP 0 | BWP 0 |

S11*  CIF = 01
BWP indicator field = 01

| CC 0 | CC 1 | CC 2 | CC 3 |
|------|------|------|------|
| BWP 0 | BWP 0 | BWP 0 | BWP 0 |
| BWP 0 | BWP 1 | BWP 1 | BWP 1 |

S12A*  CIF = 10
BWP indicator field = 01

S12B*  CIF = 11
BWP indicator field = 01

| CC 0 | CC 1 | CC 2 | CC 3 |
|------|------|------|------|
| BWP 0 | BWP 0 | BWP 0 | BWP 0 |
| BWP 0 | BWP 1 | BWP 1 | BWP 1 |
| BWP 0 | BWP 1 | BWP 1 | BWP 1 |

| CC 0 | CC 1 | CC 2 | CC 3 |
|------|------|------|------|
| BWP 0 | BWP 0 | BWP 0 | BWP 0 |
| BWP 0 | BWP 1 | BWP 1 | BWP 1 |
| BWP 0 | BWP 1 | BWP 1 | BWP 1 |

FIG. 8

```
┌─────────────────────┐                    ┌─────────────────────┐
│   Network device    │                    │      Terminal       │
└──────────┬──────────┘                    └──────────┬──────────┘
           │                                          │
           │  Step 900: First information, where the  │
           │  first information is used to schedule   │
           │       data transmission of a first       │
           │               carrier                    │
           │─────────────────────────────────────────>│
           │                                          │
           │                              ┌───────────┴───────────┐
           │                              │  Step 910: Perform    │
           │                              │  BWP switching of a   │
           │                              │ second carrier based  │
           │                              │      on the first     │
           │                              │     information       │
           │                              └───────────┬───────────┘
           │                                          │
```

FIG. 9

```
┌──────────────────────────────────────────────────┐
│  Step 1000: A first apparatus determines that a   │
│  first cell enters an active state from an        │
│  inactive state or enters a non-dormant state     │
│  from a dormant state                             │
└────────────────────────┬─────────────────────────┘
                         │
┌────────────────────────┴─────────────────────────┐
│  Step 1010: The first apparatus determines, based │
│  on an active BWP of a second cell, the first     │
│  active BWP of the first cell after the state     │
│  switching                                        │
└──────────────────────────────────────────────────┘
```

FIG. 10

| CC 0 | CC 1 | CC 2 | CC 3 |
|------|------|------|------|
| BWP 0 | NA | BWP 0 | BWP 0 |

S21*

Activate the CC 1
*firstActiveDownlinkBWP-Id*=1

| CC 0 | CC 1 | CC 2 | CC 3 |
|------|------|------|------|
| BWP 0 | NA | BWP 0 | BWP 0 |
| BWP 0 | BWP 0 | BWP 0 | BWP 0 |

S22A*
CIF = 10
BWP indicator = 00

S22B*
CIF = 11
BWP indicator = 00

| CC 0 | CC 1 | CC 2 | CC 3 |
|------|------|------|------|
| BWP 0 | BWP 0 | BWP 0 | BWP 0 |
| BWP 0 | BWP 0 | BWP 0 | BWP 0 |
| BWP 0 | BWP 0 | BWP 0 | BWP 0 |

| CC 0 | CC 1 | CC 2 | CC 3 |
|------|------|------|------|
| BWP 0 | BWP 0 | BWP 0 | BWP 0 |
| BWP 0 | BWP 0 | BWP 0 | BWP 0 |
| BWP 0 | BWP 0 | BWP 0 | BWP 0 |

FIG. 11

EP 4 661 544 A1

```
┌─────────────────────┐                          ┌─────────────────────┐
│   Network device    │                          │      Terminal       │
└─────────────────────┘                          └─────────────────────┘
           │                                                │
           │  Step 1200: First DCI, where a first           │
           │  indication field in the first DCI indicates   │
           │  a first carrier, and no BWP whose BWP         │
           │  identifier is a value of a BWP indicator      │
           │  field in the first DCI is configured on the   │
           │  first carrier                                 │
           │───────────────────────────────────────────────▶│
           │                                                │
           │  Step 1210: Perform data transmission          │
           │        by using a first BWP                    │
           │───────────────────────────────────────────────▶│
           │                                                │
```

FIG. 12

```
┌─────────────────────┐                          ┌─────────────────────┐
│   Network device    │                          │      Terminal       │
└─────────────────────┘                          └─────────────────────┘
           │                                                │
 ┌──────────────────────────┐                               │
 │ Step 1300: Determine to  │                               │
 │ schedule data transmission│                              │
 │ of a first carrier, but not to│                          │
 │ schedule data transmission│                              │
 │ of a second carrier      │                               │
 └──────────────────────────┘                               │
           │                                                │
           │  Step 1310: First DCI, where a first indication field in │
           │  the first DCI indicates the first carrier and the second│
           │  carrier, and no BWP whose BWP identifier is a value     │
           │  of a BWP indicator field in the first DCI is            │
           │  configured on the second carrier                        │
           │───────────────────────────────────────────────▶│
           │                                     ┌──────────────────────────┐
           │                                     │ Step 1320: Determine, based│
           │                                     │ on the first DCI, that the first│
           │                                     │ DCI is used to schedule data│
           │                                     │ transmission of the first  │
           │                                     │ carrier, but not used to   │
           │                                     │ schedule data transmission of│
           │                                     │ the second carrier         │
           │                                     └──────────────────────────┘
           │                                                │
```

FIG. 13

Communication apparatus
1400

Processing unit 1410

Transceiver unit 1420

FIG. 14

Communication apparatus 1500

Processor 1510

Interface circuit
1520

Memory 1530

FIG. 15

## INTERNATIONAL SEARCH REPORT

| | International application No. |
|---|---|
| | **PCT/CN2024/075863** |

**A. CLASSIFICATION OF SUBJECT MATTER**

H04W 72/0453(2023.01)i

According to International Patent Classification (IPC) or to both national classification and IPC

**B. FIELDS SEARCHED**

Minimum documentation searched (classification system followed by classification symbols)

IPC: H04W H04L

Documentation searched other than minimum documentation to the extent that such documents are included in the fields searched

Electronic data base consulted during the international search (name of data base and, where practicable, search terms used)

CNTXT, ENTXTC, ENTXT, VEN, 3GPP: 下行控制信息, 指示域, 小区, 载波, 带宽部分, 指示, 值, 没有, 未, 配置, 字段, DCI, BWP, CIF, indicat+, field, cell, carrier, value, not, config+, CC

**C. DOCUMENTS CONSIDERED TO BE RELEVANT**

| Category* | Citation of document, with indication, where appropriate, of the relevant passages | Relevant to claim No. |
|---|---|---|
| A | CN 110677887 A (ZTE CORP.) 10 January 2020 (2020-01-10) description, paragraphs 37-62 | 1-7 |
| A | CN 110536422 A (HUAWEI TECHNOLOGIES CO., LTD.) 03 December 2019 (2019-12-03) entire document | 1-7 |
| A | WO 2020030020 A1 (HUAWEI TECHNOLOGIES CO., LTD.) 13 February 2020 (2020-02-13) entire document | 1-7 |
| A | US 2022408458 A1 (SAMSUNG ELECTRONICS CO., LTD.) 22 December 2022 (2022-12-22) entire document | 1-7 |
| A | QUALCOMM INC. "Remaining Issues on BWP" *3GPP TSG RAN WG1 Meeting #92 R1-1802844*, 02 March 2018 (2018-03-02), entire document | 1-7 |

☐ Further documents are listed in the continuation of Box C.　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **28 April 2024** | **07 May 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/075863**

| Patent document cited in search report | | | Publication date (day/month/year) | Patent family member(s) | | | Publication date (day/month/year) |
|---|---|---|---|---|---|---|---|
| CN | 110677887 | A | 10 January 2020 | None | | | |
| CN | 110536422 | A | 03 December 2019 | WO | 2019223558 | A1 | 28 November 2019 |
| WO | 2020030020 | A1 | 13 February 2020 | CN | 110831198 | A | 21 February 2020 |
| | | | | IN | 202147009657 | A | 12 March 2021 |
| | | | | EP | 3836677 | A1 | 16 June 2021 |
| | | | | VN | 78774 | A | 25 June 2021 |
| | | | | US | 2021204288 | A1 | 01 July 2021 |
| US | 2022408458 | A1 | 22 December 2022 | EP | 4331308 | A1 | 06 March 2024 |
| | | | | WO | 2022270843 | A1 | 29 December 2022 |
| | | | | KR | 20240022444 | A | 20 February 2024 |
| | | | | CN | 117561775 | A | 13 February 2024 |

Form PCT/ISA/210 (patent family annex) (July 2022)

**REFERENCES CITED IN THE DESCRIPTION**

**Patent documents cited in the description**

- CN 202310152276